# EUROPEAN PATENT SPECIFICATION

(11) **EP 3 855 850 B1**
(45) Date of publication and mention of the grant of the patent: **21.05.2025**
(21) Application number: 19867588.6
(22) Date of filing: 27.09.2019
(51) Int. Cl.: H04W 74/0833, H04L 69/324, H04W 74/00

(54) **RANDOM ACCESS METHOD AND COMMUNICATION APPARATUS**
DIREKTZUGRIFFSVERFAHREN UND KOMMUNIKATIONSVORRICHTUNG
PROCÉDÉ D'ACCÈS ALÉATOIRE ET APPAREIL DE COMMUNICATION

(30) Priority: 28.09.2018 CN 201811140232
(43) Date of publication of application: 28.07.2021
(73) Proprietor: Huawei Technologies Co., Ltd., Longgang District Shenzhen, Guangdong 518129 (CN)
(72) Inventor: WU, Yiqun, Shenzhen, Guangdong 518129 (CN); CHEN, Yan, Shenzhen, Guangdong 518129 (CN)
(74) Representative: Maiwald GmbH
(86) International application number: PCT/CN2019/108431
(87) International publication number: WO 2020/063828

(56) References cited:
- EP-A1- 3 277 042
- WO-A1-2018/127042
- WO-A2-2018/094094
- CN-A- 108 064 050
- US-A1- 2018 205 516
- US-A1- 2018 279 186
- US-A1- 2019 075 598
- OPPO: "Two-steps RACH Procedure for NR-U", R2-1811067, 3GPP TSG-RAN WG2 MEETING #103, 24 August 2018 (2018-08-24), XP051520768
- "System Access and Support for Different Numerologies", R2-168592, 3GPP TSG-RAN WG2 #96, 18 November 2016 (2016-11-18), XP051178162
- "Random Access Procedure", R I-1700702, 3GPP TSG RAN WG1 AH_NR MEETING, 20 January 2017 (2017-01-20), XP051208226

## Description

This application claims priority to Chinese Patent Application No. 201811140232.1, filed with the China Patent Office on September 28, 2018 and entitled "RANDOM ACCESS METHOD AND COMMUNICATIONS APPARATUS".

### TECHNICAL FIELD

This application relates to the communications field, and more specifically, to a random access method and a communications apparatus.

### BACKGROUND

A wireless cellular network may provide a wireless communication service for a terminal device by deploying a network device, for example, a base station. The network device and the terminal device may transmit data to each other.

US2018/279186A1 describes Systems, apparatuses, and methods for wireless communications. Random access procedures may include various types of procedures, such as 4-step or 2-step random access procedures. One or more indicators may be included in one or more messages for a handover to indicate a type of a random access procedure.

WO2018/127042A1 describes methods, apparatuses and computer program for random access in a wireless communication system. A method implemented in a network device comprises: receiving, from a terminal device, a signal for initiating an RA procedure of a first RA type, the signal including a preamble portion and an information portion; and in response to successfully detecting the preamble portion of the signal but failure in detection of the information portion of the signal, transmitting one of the following to the terminal device: a first response indicating a successful detection of only a preamble portion of the signal, and a second response indicating an RA procedure of a second RA type different from the first RA type. It is described that embodiments may increase the reliability of a two-step RACH procedure and/or reduce consumption of time-frequency resources.

When transmitting data to the network device, the terminal device usually needs to establish uplink synchronization with the network device. When the terminal device establishes no uplink synchronization with the network device, the terminal device usually needs to first establish uplink synchronization based on a contention-based four-step random access procedure (random access procedure) or a two-step random access procedure, and then transmits uplink data.

However, in the prior art, there is no corresponding solution for a random access procedure that should be specifically used when a terminal device performs uplink synchronization.

### SUMMARY

This application provides a random access method and a communications apparatus, so that a network device can flexibly adjust a random access mode used by a terminal device, thereby reducing a delay, and improving communication efficiency.

In an aspect, there is provided a communication apparatus as defined in appended claim 1. In an aspect, there is provided a communication apparatus as defined in appended claim 5. In an aspect, there is provided a random access as defined in appended claim 9. The invention and its scope of protection is defined by these referenced claims. The following examples of the disclosure provide the skilled person with exemplary understandings of how technical features can be combined one with the other.

According to a first example, a random access method is provided. The method includes: A first wireless device sends indication information to a second wireless device, where the indication information is used to indicate a random access mode of the second wireless device, and the indication information is carried in physical layer control information or a media access control MAC control element. The first wireless device receives a first message Msg1 sent by the second wireless device in a random access procedure.

Based on the foregoing technical solution, the first wireless device may indicate the random access mode of the second wireless device by sending, to the second wireless device, the indication information carried in non-higher layer signaling. The non-higher layer signaling may be physical layer control information, for example, downlink control information (downlink control information, DCI) or sidelink control information (sidelink control information, SCI), or the non-higher layer signaling may be a media access control MAC control element. The random access mode may include two-step random access and four-step random access, or the random access mode may include a Msg1 that carries only a random access preamble, or a Msg1 that carries only data, or a Msg1 that carries both a random access preamble and data. A random access mode specifically used by the second wireless device may be determined by the first wireless device based on some factors. For example, the first wireless device may determine, based on a network status or a service type of the second wireless device, a random access mode used by the second wireless device. Specifically, for example, when a service of the second wireless device has a relatively high delay requirement, the first wireless device may indicate the second wireless device to use two-step random access or add data to the Msg1 (or add data and a random access preamble to the Msgl). For another example, when network congestion occurs, two-step random access increases interference between devices, causing more severe network congestion. Therefore, four-step random access is more suitable. In this case, the first wireless device may indicate the second wireless device to use four-step random access or add only a random access preamble to the Msg1. In addition, the random access mode of the second wireless device may be indicated in real time by using the non-higher layer signaling. For example, a random access mode used by the second wireless device may be indicated based on a real-time network load status, thereby improving communication efficiency.

With reference to the first example, in some implementations of the first example, the random access mode includes any one of the following: sending a Msg1 that carries a random access preamble; or sending a Msg1 that carries a random access preamble and data; or sending a Msg1 that carries data. The foregoing random access mode may also be understood as a sending manner of the Msg1 in the random access procedure.

Based on the foregoing technical solution, the random access mode may be sending a Msg1 that carries a random access preamble. In this case, the random access mode may also be understood as a four-step random access mode, that is, the first wireless device may indicate that the random access mode of the second wireless device is the four-step random access mode. For another example, the random access mode may be sending a Msg1 that carries data, or the random access mode may be sending a Msg1 that carries both data and a random access preamble. The two cases may also be understood as two-step random access modes, that is, the first wireless device may indicate that the random access mode of the second wireless device is the two-step random access mode. By indicating a message format of the Msg1 in the first step in the random access procedure, or indicating whether the random access mode is four-step random access or two-step random access, the random access mode used by the second wireless device can be flexibly adjusted based on a real-time load status.

With reference to the first example, in some implementations of the first example, the indication information is carried in one or more reserved bits in the physical layer control information or the MAC control element.

Based on the foregoing technical solution, the reserved bit in the physical layer control information (for example, DCI or SCI) or the MAC control element may be properly used, and a message format of the Msg1 (which may also be referred to as a sending manner of the Msg1) is indicated by using the reserved bit. For example, one or more bit fields may be added to indicate the message format of the Msg1. In this way, the random access mode of the second wireless device can be flexibly adjusted in real time, and signaling overheads can also be reduced.

With reference to the first example, in some implementations of the first example, a cyclic redundancy check CRC bit in the physical layer control information is scrambled by using one of at least two scrambling sequences, and different scrambling sequences in the at least two scrambling sequences correspond to different random access modes; and the indication information is specifically the scrambling sequence used to scramble the CRC bit in the physical layer control information.

Based on the foregoing technical solution, the indication information may be specifically the scrambling sequence used for the CRC bit, that is, a message format of the Msg1 may be indicated by using different CRC scrambling sequences. For example, the cyclic redundancy check (cyclic redundancy check, CRC) bit is usually scrambled by using a cell radio network temporary identifier (cell radio network temporary identifier, C-RNTI). In this case, another scrambling sequence such as an M-RNTI (Messsage1-RNTI) may be added, and the two scrambling sequences each correspond to one random access mode. By scrambling the CRC bit by using the C-RNTI or the M-RNTI, different random access modes are indicated.

With reference to the first example, in some implementations of the first example, the indication information specifically indicates that the random access mode of the second wireless device is sending a Msg1 that carries a random access preamble and data; and the physical layer control information or the MAC control element further carries a random access preamble index, and the random access preamble index is used to determine the random access preamble and a transmission parameter configuration used to transmit the data.

Based on the foregoing technical solution, when it is indicated that the random access mode is two-step random access, or the random access mode is sending a Msg1 that carries a random access preamble and data, the physical layer control information (for example, DCI or SCI) or the MAC control element may carry the random access preamble index, and the random access preamble index may be used to determine the random access preamble and the transmission parameter configuration (that is, the transmission parameter configuration used to transmit the data). For example, there is a one-to-one correspondence between a random access preamble index and a transmission parameter configuration. In this case, the second wireless device may determine the transmission parameter configuration based on the random access preamble index and the correspondence, and generate the Msg1 based on the transmission parameter configuration and the random access preamble index. For another example, there is a one-to-many correspondence between a random access preamble index and a transmission parameter configuration, that is, one random access preamble index corresponds to a plurality of transmission parameter configurations. In this case, the second wireless device may determine, based on the random access preamble index, a plurality of transmission parameter configurations corresponding to the random access preamble index, and then select one transmission parameter configuration from the plurality of transmission parameter configurations according to a preset rule or randomly to transmit the data in the Msg1.

With reference to the first example, in some implementations of the first example, the indication information specifically indicates that the random access mode of the second wireless device is sending a Msg1 that carries a random access preamble and data; and the physical layer control information or the MAC control element further carries a random access preamble index and a transmission parameter configuration index, and the transmission parameter configuration index indicates one or more transmission parameter configurations used to transmit the data.

Based on the foregoing technical solution, when it is indicated that the random access mode is two-step random access, or the random access mode is sending a Msg1 that carries a random access preamble and data, the physical layer control information (for example, DCI or SCI) or the MAC control element may carry the random access preamble index and the transmission parameter configuration index, and the random access preamble and the transmission parameter configuration may be determined based on the random access preamble index and the transmission parameter configuration index. For example, if the transmission parameter configuration index indicates only one transmission parameter configuration, it is determined that a transmission parameter configuration used to transmit the data in the Msg1 is the transmission parameter configuration indicated by the transmission parameter configuration index. For another example, if the transmission parameter configuration index indicates a plurality of transmission parameter configurations (or a set of transmission parameter configurations), and there is a one-to-many correspondence between a random access preamble index and a transmission parameter configuration, the second wireless device may determine a plurality of transmission parameter configurations based on the random access preamble index and the correspondence, determine, from the plurality of transmission parameter configurations, a transmission parameter configuration used to transmit the foregoing data, and generate the Msg1 based on the determined transmission parameter configuration and the random access preamble index, thereby ensuring communication reliability.

With reference to the first example, in some implementations of the first example, the indication information specifically indicates that the random access mode of the second wireless device is sending a Msg1 that carries data; and the physical layer control information or the MAC control element further carries a transmission parameter configuration index, and the transmission parameter configuration index is used to indicate one or more transmission parameter configurations used to transmit the data.

Based on the foregoing technical solution, the first wireless device notifies the second wireless device of the transmission parameter configuration index by using the physical layer control information or the MAC control element, and the second wireless device determines, based on the transmission parameter configuration index, the one or more transmission parameter configurations used to transmit the data. In an embodiment, the transmission parameter configuration index indicates only one transmission parameter configuration, and the second wireless device directly uses the transmission parameter configuration indicated by the transmission parameter configuration index to transmit the data in the Msg1. In another embodiment, the transmission parameter configuration index indicates a plurality of transmission parameter configurations, and the second wireless device determines (for example, randomly determines) one transmission parameter configuration from the plurality of transmission parameter configurations to transmit the data in the Msg1. Each transmission parameter configuration includes, for example, one or more of the following transmission parameter configurations: a time-frequency resource, a transmission waveform, a modulation and coding scheme, and a signature sequence. In this way, signaling overheads caused by indicating the transmission parameter configuration used to transmit the data can be reduced.

With reference to the first example, in some implementations of the first example, the transmission parameter configuration used to transmit the data includes at least one of the following transmission parameter configurations: a time-frequency resource, a transmission waveform, a modulation and coding scheme, a hybrid automatic repeat request HARQ process number, a reference signal, and a signature sequence of the data.

Based on the foregoing technical solution, the transmission parameter configuration used to transmit the data indicates information about a transmission parameter configuration used to transmit data. A specific name of the transmission parameter configuration does not constitute a limitation on the protection scope of this application.

According to a second example, a random access method is provided. The method includes: A second wireless device obtains indication information sent by a first wireless device, where the indication information is used to indicate a random access mode of the second wireless device, and the indication information is carried in physical layer control information or a media access control MAC control element. The second wireless device sends a first message Msg1 to the first wireless device based on the indication information.

Based on the foregoing technical solution, the second wireless device may determine the random access mode by using the received indication information. The indication information may be carried in non-higher layer signaling. The non-higher layer signaling may be physical layer control information, for example, DCI or SCI, or the non-higher layer signaling may be a media access control MAC control element. The random access mode may include two-step random access and four-step random access, or the random access mode may include content (for example, only a random access preamble, or only data, or both a random access preamble and data) carried in the Msg1 in a random access procedure. A random access mode specifically used by the second wireless device may be determined by the first wireless device based on some factors and notified to the second wireless device. For example, the first wireless device may determine, based on a network status or a service type of the second wireless device, a random access mode used by the second wireless device. Specifically, for example, when the service of the second wireless device has a relatively high delay requirement, the first wireless device may indicate the second wireless device to use two-step random access or add data to the Msg1 (or add data and a random access preamble to the Msgl). For another example, when network congestion occurs, two-step random access increases interference between devices, causing more severe network congestion. Therefore, four-step random access is more suitable. In this case, the first wireless device may indicate the second wireless device to use four-step random access or add only a random access preamble to the Msg1. In addition, the random access mode of the second wireless device may be indicated in real time by using the non-higher layer signaling. For example, a random access mode used by the second wireless device may be indicated based on a real-time network load status, thereby improving communication efficiency.

With reference to the second example, in some implementations of the second example, that the second wireless device sends a Msg1 to the first wireless device based on the indication information includes: The second wireless device sends, to the first wireless device based on the indication information, a Msg1 that carries a random access preamble; or the second wireless device sends, to the first wireless device based on the indication information, a Msg1 that carries a random access preamble and data; or the second wireless device sends, to the first wireless device based on the indication information, a Msg1 that carries data.

Based on the foregoing technical solution, the random access mode may also be understood as a sending manner of the Msg1 in a random access procedure. The random access mode may be sending a Msg1 that carries a random access preamble. In this case, the random access mode may also be understood as a four-step random access mode, that is, the first wireless device may indicate that the random access mode of the second wireless device is the four-step random access mode. For another example, the random access mode may be sending a Msg1 that carries data, or the random access mode may be sending a Msg1 that carries both data and a random access preamble. The two cases may also be understood as two-step random access modes, that is, the first wireless device may indicate that the random access mode of the second wireless device is the two-step random access mode. By indicating content carried in the to-be-sent Msg1, or indicating whether the random access mode is four-step random access or two-step random access is indicated, the random access mode used by the second wireless device can be flexibly adjusted based on a real-time load status.

With reference to the second example, in some implementations of the second example, the indication information is carried in one or more reserved bits in the physical layer control information or the MAC control element.

Based on the foregoing technical solution, the reserved bit in the physical layer control information (for example, DCI or SCI) or the MAC control element may be properly used, and a message format of the Msg1 is indicated by using the reserved bit. For example, one or more bit fields may be added to indicate the message format of the Msg1. In this way, the random access mode of the second wireless device can be flexibly adjusted in real time, and signaling overheads can also be reduced.

With reference to the second example, in some implementations of the second example, that a second wireless device obtains indication information sent by a first wireless device includes: determining a scrambling sequence used to scramble a cyclic redundancy check CRC bit in the physical layer control information, where the indication information is specifically the determined scrambling sequence. That the second wireless device sends a Msg1 to the first wireless device based on the indication information includes: The second wireless device sends the Msg1 to the first wireless device based on a random access mode corresponding to the determined scrambling sequence. In an example, the second device may determine, based on a preset or preconfigured correspondence between a CRC scrambling sequence and a random access mode, the random access mode corresponding to the determined scrambling sequence. In the correspondence between a CRC scrambling sequence and a random access mode, there are at least two different CRC scrambling sequences, and different CRC scrambling sequences correspond to different random access modes.

Based on the foregoing technical solution, the indication information may be specifically the CRC scrambling sequence, that is, a message format of the Msg1 (which may also be referred to as a sending manner of the Msg1) may be determined based on the correspondence between a CRC scrambling sequence and an access mode, and the CRC scrambling sequence used for the received physical layer control information. For example, the CRC bit is usually scrambled by using a C-RNTI. In this case, another scrambling sequence such as an M-RNTI (Messsage1-RNTI) may be added, and the two scrambling sequences each correspond to one random access mode. By scrambling the CRC bit by using the C-RNTI or the M-RNTI, different random access modes are indicated. After receiving the control information, the second wireless device may determine the corresponding random access mode based on the CRC scrambling sequence for the control information.

With reference to the second example, in some implementations of the second example, the indication information specifically indicates that the random access mode is sending a Msg1 that carries a random access preamble and data, and the physical layer control information or the MAC control element further carries a random access preamble index. The method further includes: determining, based on the random access preamble index, a transmission parameter configuration that is associated with the random access preamble index and that is used to transmit the data. That the second wireless device sends a Msg1 to the first wireless device based on the indication information includes: The second wireless device sends the data in the Msg1 to the first wireless device based on the determined transmission parameter configuration used to transmit the data.

Based on the foregoing technical solution, when it is indicated that the random access mode is two-step random access, or the random access mode is sending a Msg1 that carries a random access preamble and data, the physical layer control information (for example, DCI or SCI) or the MAC control element may carry the random access preamble index, and the transmission parameter configuration used to transmit the data in the Msg1 is determined based on a correspondence between a random access preamble index and a transmission parameter configuration used to transmit data. For example, there is a one-to-one correspondence between a random access preamble index and a transmission parameter configuration. In this case, the second wireless device may determine the transmission parameter configuration based on the random access preamble index and the correspondence, and generate the Msg1 based on the transmission parameter configuration and the random access preamble index. For another example, there is a one-to-many correspondence between a random access preamble index and a transmission parameter configuration, that is, one random access preamble index corresponds to a plurality of transmission parameter configurations. In this case, the second wireless device may determine, based on the random access preamble index, a plurality of transmission parameter configurations corresponding to the random access preamble index, and then select one transmission parameter configuration from the plurality of transmission parameter configurations according to a preset rule or randomly to transmit the data in the Msg1.

With reference to the second example, in some implementations of the second example, the indication information specifically indicates that the random access mode is sending a Msg1 that carries a random access preamble and data, the physical layer control information or the MAC control element further carries a random access preamble index and a transmission parameter configuration index, and the transmission parameter configuration index is used to indicate one or more transmission parameter configurations used to transmit the data. That the second wireless device sends a Msg1 to the first wireless device based on the indication information includes: The second wireless device sends the data in the Msg1 to the first wireless device based on the transmission parameter configuration that is used to transmit the data and that is indicated by the transmission parameter configuration index.

Based on the foregoing technical solution, when it is indicated that the random access mode is two-step random access, or the random access mode is sending a Msg1 that carries a random access preamble and data, the physical layer control information (for example, DCI or SCI) or the MAC control element may carry the random access preamble index and the transmission parameter configuration index, and the random access preamble and the transmission parameter configuration used to transmit the data in the Msg1 may be determined based on the random access preamble index and the transmission parameter configuration index. For example, that the transmission parameter configuration used to transmit the data in the Msg1 is determined includes: the transmission parameter configuration used to transmit the data is determined from a plurality of transmission parameter configurations indicated by the transmission parameter configuration index. For another example, a plurality of transmission parameter configurations may be determined based on the transmission parameter configuration index, the transmission parameter configuration used to transmit the data in the Msg1 may be determined from the plurality of transmission parameter configurations, and the Msg1 may be generated based on the transmission parameter configuration and the random access preamble index, thereby ensuring communication reliability.

With reference to the second example, in some implementations of the second example, the indication information specifically indicates that the random access mode is sending a Msg1 that carries data, the physical layer control information or the MAC control element further carries a transmission parameter configuration index, and the transmission parameter configuration index is used to indicate one or more transmission parameter configurations used to transmit the data. That the second wireless device sends a Msg1 to the first wireless device based on the indication information includes: The second wireless device sends the data in the Msg1 to the first wireless device based on the transmission parameter configuration indicated by the transmission parameter configuration index.

Based on the foregoing technical solution, the first wireless device notifies the second wireless device of the transmission parameter configuration index by using the physical layer control information or the MAC control element, and the second wireless device determines, based on the transmission parameter configuration index, the one or more transmission parameter configurations used to transmit the data. In an embodiment, the transmission parameter configuration index indicates only one transmission parameter configuration, and the second wireless device directly uses the transmission parameter configuration indicated by the transmission parameter configuration index to transmit the data in the Msg1. In another embodiment, a plurality of transmission parameter configurations may be determined based on the transmission parameter configuration index, and the second wireless device determines (for example, randomly determines) one transmission parameter configuration from the plurality of transmission parameter configurations to transmit the data in the Msg1. Each transmission parameter configuration includes, for example, one or more of the following transmission parameter configurations used to determine the data: a time-frequency resource, a transmission waveform, a modulation and coding scheme, and a signature sequence. In this way, signaling overheads caused by indicating the transmission parameter configuration used to transmit the data can be reduced.

With reference to the second example, in some implementations of the second example, the transmission parameter configuration used to transmit the data includes at least one of the following transmission parameter configurations: a time-frequency resource, a transmission waveform, a modulation and coding scheme, a hybrid automatic repeat request HARQ process number, a reference signal, and a signature sequence of the data.

According to a third example, a communications apparatus is provided, including modules or units configured to perform the method in any possible implementation of the first example.

According to a fourth example, a communications apparatus is provided, including a processor. The processor is coupled to a memory, and may be configured to execute an instruction in the memory, to implement the method in any possible implementation of the first example. Optionally, the communications apparatus further includes the memory. Optionally, the communications apparatus further includes a communications interface, and the processor is coupled to the communications interface.

In an implementation, the communications apparatus is a network device. When the communications apparatus is a network device, the communications interface may be a transceiver or an input/output interface.

In another implementation, the communications apparatus is a chip disposed in a network device. When the communications apparatus is a chip disposed in a network device, the communications interface may be an input/output interface.

Optionally, the transceiver may be a transceiver circuit. Optionally, the input/output interface may be an input/output circuit.

According to a fifth example, a communications apparatus is provided, including modules or units configured to perform the method in any possible implementation of the second example.

According to a sixth example, a communications apparatus is provided, including a processor. The processor is coupled to a memory, and may be configured to execute an instruction in the memory, to implement the method in any possible implementation of the second example. Optionally, the communications apparatus further includes the memory. Optionally, the communications apparatus further includes a communications interface, and the processor is coupled to the communications interface.

In an implementation, the communications apparatus is a terminal device. When the communications apparatus is a terminal device, the communications interface may be a transceiver or an input/output interface.

In another implementation, the communications apparatus is a chip disposed in a terminal device. When the communications apparatus is a chip disposed in a terminal device, the communications interface may be an input/output interface.

Optionally, the transceiver may be a transceiver circuit. Optionally, the input/output interface may be an input/output circuit.

According to a seventh example, a processor is provided, including an input circuit, an output circuit, and a processing circuit. The processing circuit is configured to receive a signal by using the input circuit and transmit a signal by using the output circuit, so that the processor is enabled to perform the method in any one of the first example or the second example, or the possible implementations of the first example or the second example.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver. A signal that is output by the output circuit may be output to, for example, but not limited to, a transmitter and transmitted by the transmitter. The input circuit and the output circuit may be a same circuit, and the circuit is used as the input circuit and the output circuit at different moments. Specific implementations of the processor and the various circuits are not limited in this embodiment of this application.

According to an eighth example, a processing apparatus is provided, including a processor and a memory. The processor is configured to: read an instruction stored in the memory, receive a signal by using a receiver, and transmit a signal by using a transmitter, to perform the method in any one of the first example or the second example, or the possible implementations of the first example or the second example.

Optionally, there are one or more processors and one or more memories.

Optionally, the memory may be integrated with the processor, or the memory and the processor are separately disposed.

In a specific implementation process, the memory may be a non-transitory (non-transitory) memory, for example, a read-only memory (read only memory, ROM). The memory and the processor may be integrated on a same chip, or may be separately disposed on different chips. A type of the memory and a manner for disposing the memory and the processor are not limited in this embodiment of this application.

It should be understood that a related data exchange process, for example, sending of indication information, may be a process of outputting indication information from the processor, and receiving of capability information may be a process of receiving input capability information by the processor. Specifically, data that is output by the processor may be output to the transmitter, and input data received by the processor may be from the receiver. The transmitter and the receiver may be collectively referred to as a transceiver.

The processing apparatus in the eighth example may be a chip. The processor may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, may be located outside the processor, or may exist independently.

According to a ninth example, a computer program product is provided. The computer program product includes a computer program (also referred to as code or an instruction), and when the computer program is run, a computer is enabled to perform the method in any one of the first example or the second example, or the possible implementations of the first example or the second example.

According to a tenth example, a computer program product is provided. The computer program product includes a computer program (also referred to as code or an instruction), and when the computer program is run, a communications apparatus is enabled to perform the method in any one of the first example or the second example, or the possible implementations of the first example or the second example.

According to an eleventh example, a computer-readable medium is provided. The computer-readable medium stores a computer program (also referred to as code or an instruction), and when the computer program is run on a computer, the computer is enabled to perform the method in any one of the first example or the second example, or the possible implementations of the first example or the second example.

According to a twelfth example, a communications system is provided, including the foregoing network device (that is, an example of the first wireless device) and the foregoing terminal device (that is, an example of the second wireless device).

### BRIEF DESCRIPTION OF DRAWINGS

FIG. 1 is a schematic diagram of a communications system to which an embodiment of this application is applicable;
FIG. 2 is another schematic diagram of a communications system to which an embodiment of this application is applicable;
FIG. 3 is a schematic flowchart of a four-step random access procedure;
FIG. 4 is a schematic flowchart of a two-step random access procedure applicable to an embodiment of this application;
FIG. 5 is a schematic flowchart of a non-contention-based random access procedure;
FIG. 6 is a schematic interaction diagram of a random access method according to an embodiment of this application;
FIG. 7 is a schematic interaction diagram of a random access method according to an embodiment of this application;
FIG. 8 is a schematic diagram of a bit field in DCI according to an embodiment of this application;
FIG. 9 is a schematic interaction diagram of a random access method according to another embodiment of this application;
FIG. 10 is a schematic diagram of a format of a MAC protocol data unit applicable to an embodiment of this application;
FIG. 11 is a schematic diagram of a MAC control element applicable to an embodiment of this application;
FIG. 12 is a schematic block diagram of a communications apparatus according to an embodiment of this application;
FIG. 13 is a schematic structural diagram of a terminal device according to an embodiment of this application; and
FIG. 14 is a schematic structural diagram of a network device according to an embodiment of this application.

### DESCRIPTION OF EMBODIMENTS

The following describes technical solutions of this application with reference to accompanying drawings.

The technical solutions of the embodiments of this application may be applied to various communications systems, such as a future 5th generation (5th generation, 5G) system or a new radio (new radio, NR) system, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), and a worldwide interoperability for microwave access (worldwide interoperability for microwave access, WiMAX) communications system. The technical solutions of the embodiments of this application may be further applied to device-to-device (device to device, D2D) communication, machine-to-machine (machine to machine, M2M) communication, machine type communication (machine type communication, MTC), and communication in an internet-of-vehicles system. Communication modes in the internet of vehicles system are collectively referred to as V2X (X represents everything). For example, the V2X communication includes vehicle-to-vehicle (vehicle to vehicle, V2V) communication, vehicle-to-infrastructure (vehicle to infrastructure, V2I) communication, vehicle-to-pedestrian (vehicle to pedestrian, V2P) communication, or vehicle-to-network (vehicle to network, V2N) communication.

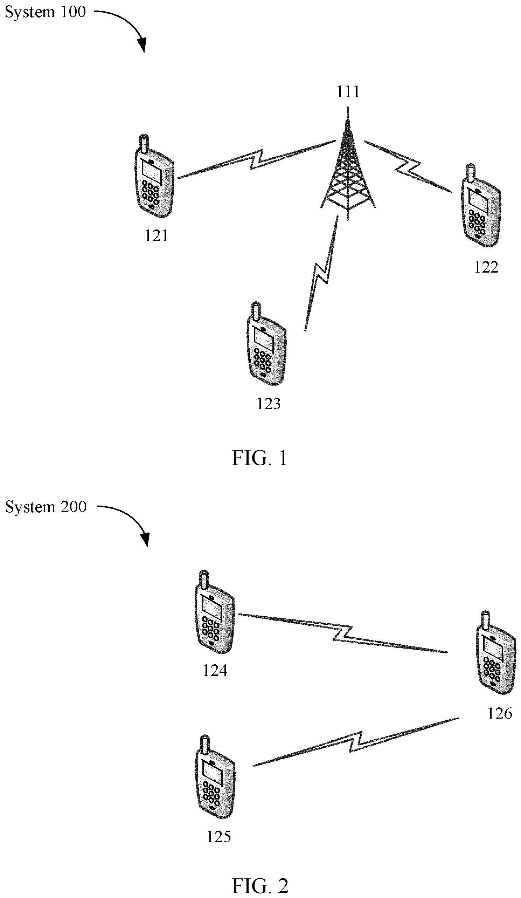

For ease of understanding of the embodiments of this application, communications systems applicable to the embodiments of this application are described in detail with reference to FIG. 1 and FIG. 2.

FIG. 1 is a schematic diagram of a wireless communications system 100 applicable to an embodiment of this application. As shown in FIG. 1, the wireless communications system 100 may include at least one network device, for example, a network device 111 shown in FIG. 1. The wireless communications system 100 may further include at least one terminal device, for example, a terminal device 121 to a terminal device 123 shown in FIG. 1. The network device and the terminal device each may be configured with a plurality of antennas, and the network device and the terminal device may communicate with each other by using a multi-antenna technology.

The network device may be used as a first wireless device, and the terminal device may be used as a second wireless device. When the network device communicates with the terminal device, the network device may manage one or more cells, and there may be an integer quantity of terminal devices in one cell. Optionally, the network device 111 and the terminal device 121 to the terminal device 123 form a single-cell communications system. Without loss of generality, a cell is denoted as a cell #1. The network device 111 may be a network device in the cell #1. In other words, the network device 111 may serve a terminal device (for example, the terminal device 121) in the cell #1.

It should be noted that a cell may be understood as an area within coverage of a radio signal of the network device.

FIG. 2 is another schematic diagram of a wireless communications system 200 applicable to an embodiment of this application. As shown in FIG. 2, the technical solutions of the embodiments of this application may be further applied to D2D communication. The wireless communications system 200 includes a plurality of terminal devices, for example, a terminal device 124 to a terminal device 126 in FIG. 2. The terminal device 124 to the terminal device 126 may directly communicate with each other. For example, the terminal device 124 and the terminal device 125 may separately or simultaneously send data to the terminal device 126. The terminal device 124 may be used as a first wireless device, and the terminal device 125 or the terminal device 126 may be used as a second wireless device.

It should be understood that the network device in the wireless communications system may be any device having a wireless transceiver function. The network device includes but is not limited to: a base station (base station, BS), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home Node B, HNB), a baseband unit (baseband unit, BBU), an access point (access point, AP) in a wireless fidelity (wireless fidelity, WIFI) system, a wireless relay node, a wireless backhaul node, a transmission point (transmission point, TP), a transmission reception point (transmission and reception point, TRP), or the like. Alternatively, the network device may be a gNB or a transmission point (TRP or TP) in a 5G system such as an NR system, or one antenna panel or a group of antenna panels (including a plurality of antenna panels) of the gNB in the 5G system, or a network node such as a baseband unit (BBU) or a distributed unit (distributed unit, DU) that constitutes the gNB or the transmission point.

In some deployments, the gNB may include a centralized unit (centralized unit, CU) and a DU. The gNB may further include a radio frequency unit (radio unit, RU). The CU implements some functions of the gNB, and the DU implements some functions of the gNB. For example, the CU implements functions of a radio resource control (radio resource control, RRC) layer and a packet data convergence protocol (packet data convergence protocol, PDCP) layer, and the DU implements functions of a radio link control (radio link control, RLC) layer, a media access control (media access control, MAC) layer, and a physical (physical, PHY) layer. Information at the RRC layer eventually becomes information at the PHY layer, or is converted from information at the PHY layer. Therefore, in this architecture, higher layer signaling such as RRC layer signaling may also be considered as being sent by the DU or by the DU and the CU. It may be understood that the network device may be a CU node, a DU node, or a device including a CU node and a DU node. In addition, the CU may be classified as a network device in an access network (radio access network, RAN), or may be classified as a network device in a core network (core network, CN). This is not limited in this application.

It should be further understood that the terminal device in the wireless communications system may also be referred to as user equipment (user equipment, UE), an access terminal, a subscriber unit, a subscriber station, a mobile station, a mobile console, a remote station, a remote terminal, a mobile device, a user terminal, a terminal, a wireless communications device, a user agent, or a user apparatus. The terminal device in the embodiments of this application may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in smart grid (smart grid), a wireless terminal in transportation safety (transportation safety), a wireless terminal in smart city (smart city), a wireless terminal in smart home (smart home), or the like. An application scenario is not limited in the embodiments of this application.

Generally, a process in which the network device (for example, the base station) sends data to the terminal device is referred to as downlink data transmission, and a process in which the terminal device sends data to the base station is referred to as uplink data transmission. When transmitting data to the network device, the terminal device usually needs to establish uplink synchronization with the network device. When the terminal device establishes no uplink synchronization with the network device, the terminal device needs to establish uplink synchronization with the network device based on a random access procedure (random access procedure). Typical application scenarios of the random access procedure include initial access, handover, uplink out-of-synchronization, positioning, beam failure recovery (beam failure recovery), and the like.

Specifically, when new uplink data arrives at the terminal device, and the terminal device is out of uplink synchronization with the network device, the terminal device usually needs to first establish uplink synchronization based on a contention-based four-step random access procedure, and then transmits the uplink data. To further reduce a delay and signaling overheads, a random access procedure in which data is directly sent in a first message (Msg1) is proposed. The access procedure includes two steps, and therefore is also referred to as two-step random access. For different random access modes, there is no corresponding solution in the prior art for how a terminal device specifically selects a random access mode.

In view of this, this application provides a random access method, so that a network device can flexibly adjust, based on a real-time load status, a random access mode used by a terminal device, thereby improving communication efficiency.

To facilitate understanding of this application, several concepts in this application are first described briefly before the embodiments of this application are described.

### 1. Four-step random access procedure

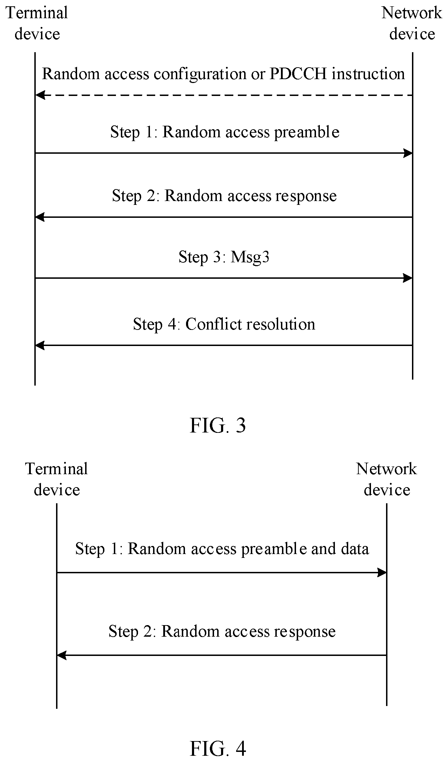

One random access mode is four-step random access. The four-step random access is merely used to represent a name of a random access mode, and a specific name of the four-step random access does not constitute a limitation on the scope of the embodiments of this application. Four-step information exchange (Msg1, Msg2, Msg3, and Msg4) needs to be performed between the terminal device and the network device. FIG. 3 shows a basic procedure of a four-step random access procedure.

Optionally, before the four-step random access procedure is performed, the network device may send random access configuration information (for example, carried in higher layer signaling) or a physical downlink control channel (physical downlink control channel, PDCCH) to the terminal device, so that the terminal device determines information such as a random access preamble (random access preamble) index, a time-frequency resource, and a power configuration.

Step 1: The terminal device sends a random access preamble (preamble), also referred to as a first message (Msg1), to the network device. A purpose of the random access preamble is to notify the network device that there is a random access request, so that the network device can estimate a transmission delay between the network device and the terminal device, thereby calibrating uplink timing (uplink timing).

Step 2: The network device sends a random access response (random access response, RAR), also referred to as a second message (Msg2), to the terminal device. Specifically, after detecting the random access preamble, the network device sends the Msg2 to the terminal device. The Msg2 may include information such as a random access preamble index, a timing advance command (timing advance command), uplink resource allocation, and a cell radio network temporary identifier.

Step 3: The terminal device sends a third message (Msg3) to the network device. Specifically, after receiving the Msg2, the terminal device first adjusts the uplink timing based on the timing advance command, and sends an uplink message, also referred to as a Msg3, on an allocated uplink resource according to an instruction of the timing advance command. If a plurality of terminal devices select a same random access preamble in step 1, a conflict occurs. For example, if a random access preamble of one of the plurality of terminal devices is correctly received by the network device, the network device sends a Msg2 to the terminal device, and the plurality of terminal devices each may receive the Msg2. The plurality of terminal devices cannot determine, by using the Msg2, a terminal device whose random access preamble has been received by the network device. In this case, these terminal devices each may receive the Msg2 and send a Msg3. Therefore, the Msg3 includes a unique identifier of the terminal device, which is used to resolve a subsequent conflict.

Step 4: The network device sends a conflict resolution message to the terminal device. Specifically, the network device receives the Msg3 from the terminal device, and returns the conflict resolution message, also referred to as a fourth message (Msg4), to the terminal device that successfully accesses the network. The network device adds the unique identifier in the Msg3 to the conflict resolution message to specify the terminal device that successfully accesses the network, and another terminal device that fails to access the network initiates random access again.

### 2. Two-step random access

The terminal device may send both the random access preamble and the data in the Msg1, so that the Msg3 and the Msg4 mentioned in FIG. 3 do not need to be sent. Two-step random access can reduce a delay and signaling overheads. The random access procedure includes only two steps, and therefore may be referred to as two-step random access. Similarly, the two-step random access is merely used to represent a name of a random access mode, and a specific name of the two-step random access does not constitute a limitation on the scope of the embodiments of this application. FIG. 4 is a schematic diagram of two-step random access. As shown in FIG. 4, the two-step random access includes two steps. Step 1: A terminal device sends a random access preamble and data to a network device. To be specific, the terminal device sends a Msg1 to the network device, where the Msg1 includes the random access preamble and the data. Step 2: The network device sends a random access response to the terminal device.

### 3. Contention-based random access and non-contention-based random access

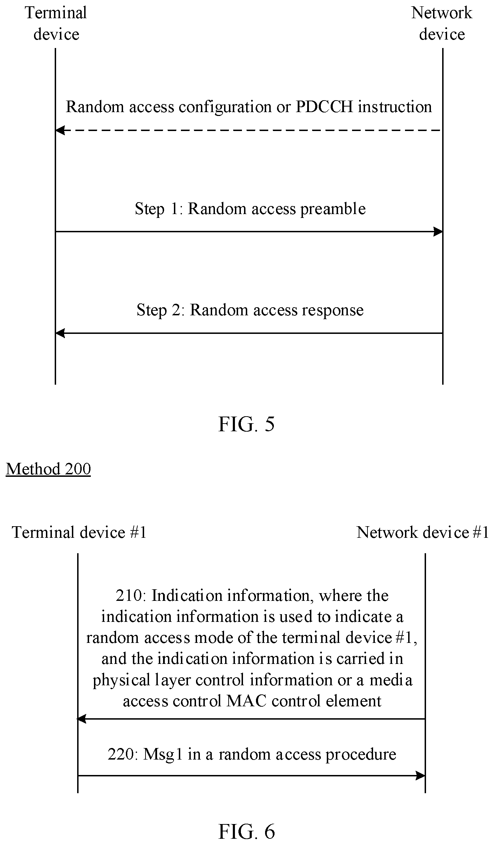

Based on whether a conflict may occur between different terminal devices in a random access procedure, there are two types of random access procedures: a contention-based (contention-based) random access procedure and a non-contention-based (contention-free, non-contention) random access procedure. The non-contention-based random access procedure mainly includes two steps. FIG. 5 shows a non-contention-based random access procedure. Step 1: A terminal device sends a random access preamble, also referred to as a Msg1, to a network device. For non-contention-based random access, the random access preamble is dedicated to the terminal device, and therefore no conflict exists. Step 2: The network device sends a random access response, also referred to as a Msg2, to the terminal device. Optionally, before random access is performed, the terminal device receives random access configuration information or a physical downlink control channel (physical downlink control channel, PDCCH) instruction sent by the network device, to determine information such as a random access preamble sequence, a time-frequency resource, and a power configuration.

It should be noted that the two-step random access procedure shown in FIG. 4 and the non-contention-based random access procedure shown in FIG. 5 each include two steps, but are different in specific transmission manners and specific message content.

### 4. Downlink control information (downlink control information, DCI)

Information carried on a PDCCH is referred to as downlink control information (downlink control information, DCI). The DCI may be used to send information such as downlink or uplink scheduling, resource allocation, power control, and retransmission indication. The DCI may indicate information at a terminal device level, and may be scrambled by using a cell radio network temporary identifier (cell radio network temporary identifier, C-RNTI). Alternatively, the DCI may indicate information at a cell level, and may be scrambled by using a system information radio network temporary identifier (system information radio network temporary identifier, SI-RNTI), a paging radio network temporary identifier (paging radio network temporary identifier, P-RNTI), a random access radio network temporary identifier (random access radio network temporary identifier, RA-RNTI), or the like.

### 5. Time-frequency resource

In the embodiments of this application, data or information may be carried on a time-frequency resource, and the time-frequency resource may include a resource in time domain and a resource in frequency domain. In time domain, the time-frequency resource may include one or more time domain units (which may also be referred to as time units), and in frequency domain, the time-frequency resource may include a frequency-domain unit.

One time domain unit (which may also be referred to as a time unit) may be one symbol, one mini-slot (Mini-slot), one slot (slot), or one subframe (subframe). Duration of one subframe in time domain may be 1 millisecond (ms), one slot includes 7 or 14 symbols, and one mini-slot may include at least one symbol (for example, 2 symbols, 7 symbols, 14 symbols, or any quantity of symbols fewer than or equal to 14 symbols). The listed values of the time domain unit are merely for ease of understanding of the solutions of this application, and should not be understood as a limitation on this application. It may be understood that the time domain unit may have another value. This is not limited in this application.

One frequency domain unit may be one resource block (resource block, RB), one resource block group (resource block group, RBG), or one predefined subband (subband).

In the embodiments of this application, "data" or "information" may be understood as a bit generated after an information block is coded, or "data" or "information" may be understood as a modulation symbol generated after an information block is coded and modulated.

It should be particularly noted that, in the embodiments of this application, "the terminal device sends only the random access preamble in the Msg1" is mentioned for a plurality of times. This description is relative to uplink data, that is, with respect to the uplink data and the random access preamble, the terminal device adds only the random access preamble to the Msg1, and does not add the uplink data to the Msg1. Therefore, "the terminal device sends only the random access preamble in the Msg1" does not mean that the terminal device adds only the random access preamble to the Msg1 and does not add another signal to the Msg1. Similarly, "the terminal device sends only the data in the Msg1" is relative to the random access preamble, that is, with respect to uplink data and the random access preamble, the terminal device adds only the uplink data to the Msg1, and does not add the random access preamble to the Msg1. Therefore, "the terminal device sends only the data in the Msg1" does not mean that the terminal device adds only the data to the Msg1 and does not add another signal to the Msg1, for example, a demodulation reference signal (demodulation reference signal, DMRS) or a sounding reference signal (sounding reference signal, SRS). A person skilled in the art may understand that, in some cases, if the terminal device sends only uplink data and does not send a demodulation reference signal on a physical uplink channel, the network device possibly cannot correctly receive the uplink data.

It should be further noted that, in the embodiments of this application, "the Msg1 includes a random access preamble", or "the Msg1 includes data", or "the Msg1 includes a random access preamble and data" is mentioned for a plurality of times. A person skilled in the art may understand a meaning thereof. "The Msg1 includes a random access preamble" means that the Msg1 carries the random access preamble. Alternatively, "the Msg1 includes data" means that the Msg1 carries uplink data. Alternatively, "the Msg1 includes a random access preamble and data" means that the Msg1 carries the random access preamble and the data.

It should be further noted that, in the embodiments of this application, the data carried in the Msg1 may be understood as uplink data sent by the terminal device to the network device.

It should be further noted that, in the embodiments of this application, a "protocol" may be a standard protocol in the communications field, for example, may include an LTE protocol, an NR protocol, and a related protocol applied to a future communications system. This is not limited in this application.

It should be further noted that, in the embodiments of this application, "pre-obtaining" may include indication by network device signaling or predefinition, for example, definition in a protocol. "Predefinition" may be implemented by prestoring corresponding code or a corresponding table in a device (for example, a terminal device or a network device) or in another manner that can be used to indicate related information. A specific implementation of "predefinition" is not limited in this application.

It should be further noted that, in the embodiments of this application, terms "network" and "system" are usually interchangeably used, but meanings of the terms may be understood by a person skilled in the art. Terms "information (information)", "signal (signal)", "message (message)", and "channel (channel)" may be interchangeably used sometimes. It should be noted that meanings expressed by the terms are consistent when differences between the terms are not emphasized. "Of (of)", "relevant (corresponding, relevant)", and "corresponding (corresponding)" may be interchangeably used sometimes. It should be noted that meanings expressed by the terms are consistent when differences between the terms are not emphasized.

It should be further noted that "at least one" means one or more, and "a plurality of" means two or more than two. The term "and/or" describes an association relationship for describing associated objects and represents that three relationships may exist. For example, A and/or B may represent the following cases: Only A exists, both A and B exist, and only B exists, where A and B may be singular or plural. The character "/" generally represents an "or" relationship between the associated objects. "At least one (piece) of the following" or a similar expression thereof is any combination thereof, including any combination of singular items (pieces) or plural items (pieces). For example, at least one (piece) of a, b, and c may represent: a, b, c, a and b, a and c, b and c, or a and b and c, where a, b, and c may be singular or plural.

The technical solutions provided in this application are described in detail below with reference to the accompanying drawings.

It should be understood that the random access method provided in this application is applicable to a wireless communications system, for example, the system 100 shown in FIG. 1 or the system 200 shown in FIG. 2. A first wireless device may be the network device 111 in the system 100 shown in FIG. 1, or may be the terminal device 124 in the system 200 shown in FIG. 2. A second wireless device may be any one or more of the terminal device 121 to the terminal device 123 in the system 100 shown in FIG. 1, or may be the terminal device 125 and/or the terminal device 126 in the system 200 shown in FIG. 2.

Without loss of generality, the following describes the embodiments of this application in detail by using an example in which the first wireless device is a network device #1, the second wireless device is a terminal device #1, and a process of interaction between the terminal device #1 and the network device #1. The terminal device #1 may be any terminal device that is in a wireless communications system and that has a wireless connection to one or more network devices. It may be understood that any terminal device in the wireless communications system may implement wireless communication based on a same technical solution. This is not limited in this application.

FIG. 6 is a schematic interaction diagram of a random access method 200 according to an embodiment of this application from a perspective of device interaction. As shown in FIG. 6, the method 200 may include step 210 and step 220.

210: A network device #1 sends indication information to a terminal device #1, where the indication information is used to indicate a random access mode of the terminal device #1, and the indication information is carried in control information or a media access control MAC control element.

220: The terminal device #1 sends a Msg1 in a random access procedure to the network device #1.

The following describes the method 200 in detail with reference to FIG. 6.

The control information layer or the media access control (media access control, MAC) control element may be understood as non-higher layer signaling. The non-higher layer signaling is relative to higher layer signaling. The higher layer signaling may be signaling sent by a higher-layer protocol layer. The higher-layer protocol layer is at least one of all protocol layers above a MAC layer. The higher layer signaling may be a broadcast message, terminal device dedicated radio resource control (radio resource control, RRC) signaling, or the like. To reduce a transmission delay that may be caused by the higher layer signaling, this application proposes that the indication information is carried in the non-higher layer signaling. Alternatively, it may be understood that the network device #1 indicates the random access mode of the terminal device #1 by using the non-higher layer signaling (for example, DCI or the MAC control element). The non-higher layer signaling may be the MAC control element, or the non-higher layer signaling may be the control information, for example, DCI or sidelink control information (sidelink control information, SCI).

For ease of understanding, this application is separately described in detail by using the DCI and the MAC control element as examples. It should be understood that the "DCI" in the following specific embodiments may also be replaced with the "SCI".

According to the present invention, the random access mode includes: sending a Msg1 that carries a random access preamble (that is, the terminal device #1 adds only the random access preamble to the Msgl); or sending a Msg1 that carries a random access preamble and data (that is, the terminal device #1 adds the random access preamble and the data to the Msgl); or sending a Msg1 that carries data (that is, the terminal device #1 adds only the data to the Msgl).

Specifically, the random access mode may include a sending manner of the Msg1 in the random access procedure of the terminal device #1. In this embodiment of this application, meanings expressed by "a sending manner of the Msg1" and "a message format of the Msg1" are consistent, or may be interchanged. The sending manner includes three possible manners. In a first manner, the Msg1 sent by the terminal device #1 in the random access procedure includes only a random access preamble. In a second manner, the Msg1 sent by the terminal device #1 in the random access procedure includes both a random access preamble and data. In a third manner, the Msg1 sent by the terminal device #1 in the random access procedure includes only data. In this case, the network device #1 may determine one of the foregoing three possible manners or two of the foregoing three possible manners as the random access mode of the terminal device #1.

Alternatively, the random access mode may include the four-step random access and the two-step random access described above, that is, the network device #1 indicates, by using the indication information, whether the random access mode of the terminal device #1 is four-step random access or two-step random access. Optionally, when the network device #1 indicates that the random access mode of the terminal device #1 is two-step random access, the network device #1 may further indicate a sending manner of the Msg1. For example, it may be indicated that the Msg1 sent by the terminal device #1 in the random access procedure includes both a random access preamble and data, or the Msg1 sent by the terminal device #1 in the random access procedure includes only data. In other words, when it is indicated that the Msg1 sent by the terminal device #1 includes only data, or the Msg1 sent by the terminal device #1 includes a random access preamble and data, it may be understood that the network device #1 indicates that the random access mode of the terminal device #1 is two-step random access.

It should be noted that indicating or determining the random access mode may also be understood as indicating or determining a message format of the Msg1 in the first step in the random access procedure.

Before sending the indication information to the terminal device #1, the network device #1 may first determine the random access mode of the terminal device #1. Specifically, the network device #1 may determine, based on a network status or a service type of the terminal device #1, a random access mode used by the terminal device #1. For example, when a service of the terminal device #1 has a relatively high delay requirement, the network device #1 may indicate the terminal device #1 to use two-step random access. For another example, when network congestion occurs, two-step random access increases interference between terminal devices, causing more severe network congestion. Therefore, four-step random access is more suitable. In this case, the network device #1 may indicate the terminal device #1 to use four-step random access. Specifically, how the network device #1 determines a random access mode used by the terminal device #1 is not limited in this embodiment of this application.

The following describes, by using an example in which the indication information is carried in the DCI or the MAC control element, how the network device #1 indicates the random access mode of the terminal device #1.

Case 1: The indication information is carried in the DCI.

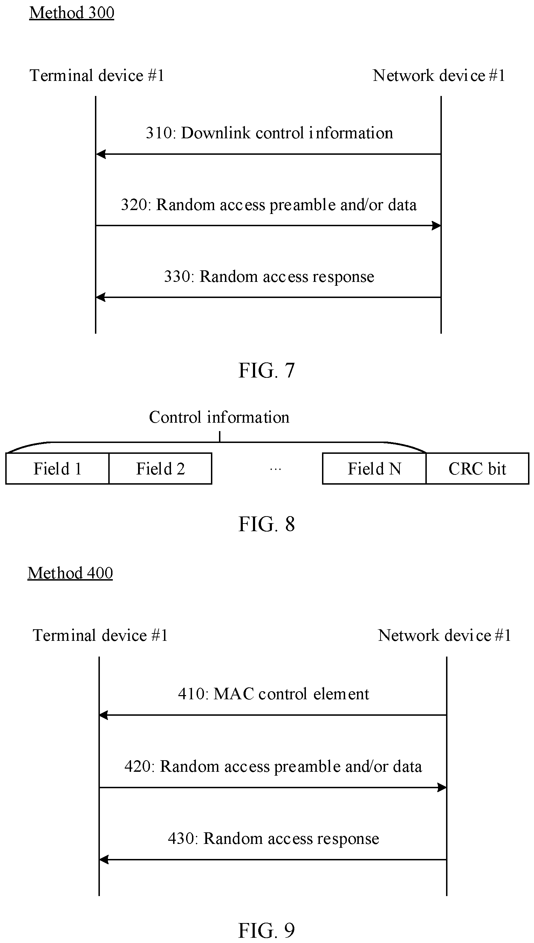

Specifically, FIG. 7 is a schematic interaction diagram of a random access method 300 according to an embodiment of this application. The method 300 includes step 310 to step 330. The following describes each step in detail.

310: A network device #1 sends DCI to a terminal device #1. The DCI is used to notify the terminal device #1 to perform a random access procedure and indicate a random access mode of the terminal device #1.

The network device #1 may indicate, by using the DCI, a random access mode used by the terminal device #1, so that the network device #1 can flexibly adjust, based on a real-time load status, the random access mode used by the terminal device #1. In addition, in comparison with a case in which higher layer signaling is used to indicate a random access mode used by the terminal device #1, a case in which the DCI is used to indicate a random access mode used by the terminal device #1 can further reduce a signaling delay and improve communication efficiency.

The following specifically describes how to indicate, by using the DCI, a random access mode used by the terminal device #1.

The DCI includes control information and a corresponding cyclic redundancy check (cyclic redundancy check, CRC) bit, and the control information includes a plurality of bit fields. FIG. 8 is a schematic diagram of a bit field in DCI according to an embodiment of this application. It can be learned from FIG. 8 that the control information includes a field 1, a field 2, ..., and a field N. Therefore, in this embodiment of this application, when the DCI is used to indicate the random access mode of the terminal device #1, at least the following two manners may be used: adding a field or using a CRC scrambling sequence. The following describes the two manners in detail.

Manner 1: Add a field.

Specifically, a field may be added on the basis of a PDCCH instruction, and the added field is used to indicate the random access mode of the terminal device #1. A length of the DCI obtained after the field is added may be the same as or different from a length of the DCI obtained before the field is added.

In the present invention, when the network device #1 sends the DCI to the terminal device #1, the network device #1 indicates the random access mode of the terminal device #1 by using one or more reserved bits in the DCI.

By indicating the random access mode of the terminal device #1 by using the reserved bit in the DCI, the length of the DCI obtained after the field is added is the same as the length of the DCI obtained before the field is added, thereby reducing a quantity of blind PDCCH detection times.

For blind PDCCH detection, because the DCI has a plurality of formats (format), the terminal device does not know a format of DCI carried on the received PDCCH, and does not know a PDCCH candidate that is used to transmit the DCI. Therefore, the terminal device performs blind PDCCH detection to receive corresponding DCI.

A specific DCI format used to indicate the random access mode is not limited in this embodiment of this application, for example, may be a DCI format 1_0 or a DCI format 1_1. For example, the random access mode is indicated by using the DCI format 1_0. In this case, the random access mode may be indicated in an information field (field) of the DCI format 1_0, for example, a reserved bit in the DCI format 1_0.

In an example of an NR system, currently, DCI used to indicate a random access procedure has 10 reserved bits, and one or more reserved bits thereof may be used to indicate the random access mode of the terminal device #1. An example in which the network device #1 indicates a sending manner of a Msg 1 in the random access procedure of the terminal device #1 is used for description.

In a possible implementation, a 1-bit field is added to indicate the sending manner of the Msg1, where 0 corresponds to sending of only a random access preamble in the Msg1, and 1 corresponds to sending of a random access preamble and data in the Msg1; or 1 corresponds to sending of only a random access preamble in the Msg1, and 0 corresponds to sending of a random access preamble and data in the Msg1; or 0 corresponds to sending of only a random access preamble in the Msg1, and 1 corresponds to sending of only data in the Msg1; or 1 corresponds to sending of only a random access preamble in the Msg1, and 0 corresponds to sending of only data in the Msg1. It should be understood that a specific indication manner is not limited in this embodiment of this application.

In another possible implementation, a 2-bit field is added to indicate the sending manner of the Msg1, where 00 corresponds to sending of only a random access preamble in the Msg1, 01 corresponds to sending of a random access preamble and data in the Msg1, and 10 corresponds to sending of only data in the Msg1; or 01 corresponds to sending of only a random access preamble in the Msg1, 10 corresponds to sending of a random access preamble and data in the Msg1, and 00 corresponds to sending of only data in the Msg1. It should be understood that a specific indication manner is not limited in this embodiment of this application.

The foregoing two possible implementations are merely examples for description. A specific quantity of reserved bits that are used to indicate the sending manner of the Msg1 or a specific indication manner is not limited in this embodiment of this application.

In addition, in addition to the random access mode (for example, the sending manner of the Msg1) of the terminal device #1, the added field (for example, the reserved bit) may be further used to indicate scheduling information of data of the Msg1 (that is, an example of a transmission parameter configuration used to transmit data), for example, one or more of the following transmission parameter configuration: a time-frequency resource, a transmission waveform, a modulation and coding scheme, a hybrid automatic repeat request (hybrid automatic repeat reQuest, HARQ) process index, a new data indicator, a redundancy version, a reference signal, or a power control indicator of the data. Optionally, when the reserved bit is used, because there are relatively few reserved bits, only a part of the scheduling information may be included. In this case, another message may be preconfigured by using higher layer signaling. In addition, a corresponding field may be compressed. For example, the modulation and coding scheme is usually indicated by using five bits in the DCI. In the DCI for indicating the sending manner of the Msg1, fewer than five bits may be used to indicate the modulation and coding scheme. To meet forward compatibility, the terminal device #1 may alternatively be notified by using higher layer signaling such as radio resource control (radio resource control, RRC) to indicate a meaning of a corresponding bit field in the DCI. A terminal device that does not receive the higher layer signaling considers these bits as reserved bits. Optionally, a meaning of a bit field in the DCI may be determined by using an information element in the higher layer signaling. For example, an RRC configuration message includes an information element PUSCHInMsg1, and the information element PUSCHInMsg1 is used to indicate whether data can be sent in the Msg1.

```
          PRACH-Config {
              PUSCHInMsg1, --Whether data can be sent in the Msg1
              ... }
```

It should be noted that the foregoing manner for indicating whether data can be sent in the Msg1 is merely a possible implementation, and this application is not limited thereto.

When the terminal device #1 determines, based on the PUSCHInMsg1, that data can be sent in the Msg1, a corresponding bit field in the DCI is understood as a bit field used to indicate the random access mode. Otherwise, these bits are considered as reserved bits.

Manner 2: Use a CRC scrambling sequence.

Optionally, the network device #1 indicates the random access mode of the terminal device #1 by using a CRC scrambling sequence in the DCI.

Generally, the CRC bit in the DCI is scrambled by using a C-RNTI. The C-RNTI is an identifier allocated by the network device #1 to the terminal device #1, and different terminal devices #1 use different C-RNTIs. In a process of detecting a PDCCH by the terminal device #1, the terminal device #1 determines, based on whether the CRC bit is scrambled by using the C-RNTI, whether the DCI is used to indicate the random access mode of the terminal device #1. In this embodiment of this application, another RNTI may be allocated to the terminal device #1. For differentiation, the RNTI is denoted as an M-RNTI (Message1-RNTI). Therefore, the random access procedure can be flexibly indicated by using the CRC scrambling sequence in the DCI.

The terminal device #1 determines a CRC scrambling sequence used to scramble the CRC bit in the received DCI, and determines, based on a preconfigured or preset correspondence between a CRC scrambling sequence and a random access mode, a random access mode corresponding to the determined scrambling sequence. In the correspondence, there are at least two CRC scrambling sequences, and different CRC scrambling sequences correspond to different random access modes. In an example, a process in which the terminal device #1 determines the CRC scrambling sequence used to scramble the CRC bit in the received DCI is as follows: The terminal device #1 attempts to descramble the CRC bit, and performs CRC based on a descrambled CRC bit. If a result of the CRC is correct, it is considered that a scrambling sequence (or a scrambling identifier) used during descrambling is a correct scrambling sequence, that is, a scrambling sequence that is the same as a scrambling sequence (or a scrambling identifier) used by the network device to scramble a CRC bit is used for descrambling. If a result of the CRC is incorrect, it is considered that descrambling is not performed by using a correct scrambling sequence, and the CRC bit needs to be descrambled by using another scrambling sequence. The scrambling sequence used to descramble the CRC bit in the received DCI when the result of the CRC is correct is the CRC scrambling sequence used to scramble the CRC bit in the DCI, and may be further used to determine the random access mode of the terminal device #1. Attempting to descramble the CRC bit may be understood as randomly using a scrambling sequence for descrambling, then performing CRC based on a descrambled CRC bit, and if a result of the CRC is correct, sending a Msg1 according to a random access mode corresponding to the scrambling sequence, or if a result of the CRC is incorrect, using another scrambling sequence for descrambling. For example, when the terminal device determines that the scrambling identifier used to scramble the CRC bit in the DCI is the C-RNTI of the terminal device #1, the terminal device sends only a random access preamble in the Msg1. When the terminal device determines that the scrambling identifier used to scramble the CRC bit in the DCI is the M-RNTI of the terminal device #1, the terminal device sends a random access preamble and data in the Msg1, or sends only data in the Msg1. For another example, when the terminal device determines that the scrambling identifier used to scramble the CRC bit in the DCI is the C-RNTI of the terminal device #1, the terminal device sends a random access preamble and data in the Msg1, or sends only data in the Msg1. When the terminal device determines that the scrambling sequence used to scramble the CRC bit in the DCI is the M-RNTI of the terminal device #1, the terminal device sends only a random access preamble in the Msg1.

In another example, a process in which the terminal device #1 determines the CRC scrambling sequence used to scramble the CRC bit in the received DCI is as follows: The terminal device #1 does not need to descramble the CRC bit in the DCI, but directly performs CRC based on the DCI, compares check data obtained through the CRC with the foregoing two CRC scrambling identifiers allocated by the network device to the terminal device #1, and if the check data matches either of the two CRC scrambling identifiers, determines a scrambling identifier used to scramble the CRC bit in the DCI, that is, the scrambling identifier that successfully matches the check data.

It should be understood that the M-RNTI is merely used to distinguish between C-RNTIs, and a specific name of the M-RNTI does not constitute a limitation on the protection scope of this embodiment of this application.

It should be noted that the terminal device #1 may pre-obtain a random access mode corresponding to the M-RNTI or the C-RNTI, for example, may prestore the random access mode corresponding to the M-RNTI or the C-RNTI. After receiving the DCI, the terminal device #1 determines the random access mode based on different CRC scrambling sequences and a prestored correspondence.

In addition to the sending manner of the Msg1, the DCI scrambled by using the M-RNTI may be further used to indicate a random access preamble of the Msg1 and a transmission parameter used to transmit data. For example, the DCI scrambled by using the M-RNTI may further indicate at least one of the following: a random access preamble index, an uplink carrier (uplink, UL)/supplementary uplink carrier (supplementary uplink, SUL) indicator, a synchronization signal (synchronization signal, SS)/physical broadcast channel (physical broadcast channel, PBCH) index, a physical random access channel (physical random access channel, PRACH) mask index, and a time-frequency resource, a transmission waveform, a modulation and coding scheme, a HARQ process index, a new data indicator, a redundancy version, a reference signal, a power control indicator, and the like of data.

The foregoing two manners are merely examples for description, and this embodiment of this application is not limited thereto. Any method in which the random access mode of the terminal device #1 is indicated by using the DCI falls within the protection scope of this embodiment of this application.

In addition, in the case 1, the network device #1 may further indicate a transmission parameter configuration of the terminal device #1 by using the DCI. The transmission parameter configuration indicates a transmission parameter configuration used to transmit data, that is, information about a transmission parameter configuration used to transmit data. In this embodiment of this application, for brevity, the transmission parameter configuration is used to indicate a transmission parameter configuration used to transmit data. It should be understood that the transmission parameter configuration is merely a name, and does not constitute a limitation on the protection scope of this application. For example, the transmission parameter configuration may also be referred to as a data configuration or data configuration information. The following provides descriptions by using two scenarios.

### Scenario A

The random access mode of the terminal device #1 is two-step random access, or the Msg1 sent by the terminal device #1 needs to carry a random access preamble and data.

When the network device #1 determines that the random access mode of the terminal device #1 is two-step random access, or the Msg1 sent by the terminal device #1 needs to carry a random access preamble and data, in a first possible implementation, the network device #1 may separately indicate a random access preamble and a transmission parameter configuration. The transmission parameter configuration may include but is not limited to one or more of the following transmission parameter configurations: a time-frequency resource, a transmission waveform, a modulation and coding scheme, a HARQ process number, a new data indicator, a reference signal, and a signature sequence of data. In a second possible implementation, a correspondence between a random access preamble and a transmission parameter configuration is preconfigured, and the terminal device #1 determines a transmission parameter configuration based on the correspondence and a random access preamble index. The following describes in detail the second possible implementation.

Optionally, there is a one-to-one correspondence between a random access preamble index and a transmission parameter configuration.

When the network device #1 notifies the terminal device #1 to send both a random access preamble and data in the Msg1, the network device #1 may preconfigure a correspondence between a random access preamble and a transmission parameter configuration, so that different random access preambles correspond to different transmission parameter configurations. The correspondence may be a one-to-one correspondence between a random access preamble index and a transmission parameter configuration. The correspondence may be preconfigured by using higher layer signaling, and the terminal device #1 prestores the correspondence. The DCI sent by the network device #1 to the terminal device #1 carries a random access preamble index, and the terminal device #1 determines a transmission parameter configuration based on the stored correspondence and the random access preamble index in the DCI. A data signal of the Msg1 may be generated based on the transmission parameter configuration.

There is a one-to-one correspondence between a random access preamble index and a transmission parameter configuration. For example, configuration may be performed in the following manner:

```
          PRACH-Config {
              PreambleIndex, --Random access preamble index
              PUSCHFreqResource --Frequency domain resource of data
              PUSCHTimeResource --Time domain resource of data
              PUSCHWaveform --Transmission waveform of data
              PUSCHMCSIndex --Modulation and coding scheme index of data
              PUSCHHARQID --HARQ process number of data
              PUSCHDMRSIndex --Reference signal port index of data
              PUSCHSignatureIndex --Signature sequence index of data
              ...
          }
```

The frequency domain resource of the data indicates a frequency domain resource that can be used for data corresponding to the random access preamble index. The time domain resource of the data indicates a time domain resource that can be used for data corresponding to the random access preamble index. The transmission waveform of the data indicates a waveform that can be used for data corresponding to the random access preamble index. The modulation and coding scheme of the data indicates a modulation order and a channel coding rate that can be used for data corresponding to the random access preamble index. The HARQ process number of the data indicates a HARQ process number that can be used for data corresponding to the random access preamble index. The reference signal port index (or an antenna port index) of the data indicates an antenna port index that can be used for data corresponding to the random access preamble index. The signature sequence index of the data indicates a signature sequence index that can be used for data corresponding to the random access preamble index. The correspondence may be a one-to-one correspondence designed based on an index, or may be a one-to-one correspondence sorted in order. Sorting in order may be implementing a correspondence in ascending or descending order of indexes, that is, sorting in ascending or descending order of random access preamble indexes. Random access preamble indexes one-to-one correspond to different transmission parameter configurations according to a sorting order.

It should be noted that the foregoing manner of the transmission parameter configuration is merely a possible implementation, and this application is not limited thereto.

Optionally, there is a one-to-many correspondence between a random access preamble index and a transmission parameter configuration.

When the network device #1 notifies the terminal device #1 to send both a random access preamble and data in the Msg1, the network device #1 may preconfigure a correspondence between a random access preamble and transmission parameter configuration information, so that different random access preambles correspond to different transmission parameter configurations. The correspondence may be a one-to-many correspondence between a random access preamble index and a transmission parameter configuration, that is, one random access preamble index corresponds to a plurality of transmission parameter configurations. The correspondence may be preconfigured by using higher layer signaling, and the terminal device #1 prestores the correspondence. The DCI sent by the network device #1 to the terminal device #1 carries a random access preamble index and a transmission parameter configuration index. In a possible implementation, the terminal device #1 determines a plurality of (two or more) transmission parameter configurations based on the stored correspondence and the random access preamble index in the DCI, and then determines a target transmission parameter configuration from the plurality of transmission parameter configurations based on the transmission parameter configuration index. In another possible implementation, the terminal device #1 determines a target transmission parameter configuration from a plurality of transmission parameter configurations based on the transmission parameter configuration index, that is, the target transmission parameter configuration is a transmission parameter configuration indicated by the transmission parameter configuration index.

There is a one-to-many correspondence between a random access preamble index and a transmission parameter configuration. For example, configuration may be performed in the following manner:

```
          PRACH-Config {
              PreambleIndex, --Random access preamble index
              PUSCHInMsg1List (1..MaxNrofPUSCHInMsg1) OF PUSCHInMsg1Config
          --Transmission parameter configuration
              ...
          }
          PUSCHInMsg1Config
              PUSCHConfigIndex --Transmission parameter configuration index
              PUSCHFreqResource --Frequency domain resource of data
              PUSCHTimeResource --Time domain resource of data
              PUSCHWaveform --Transmission waveform of data
              PUSCHHARQID --HARQ process number of data
              PUSCHDMRSIndex --Reference signal port index of data
              PUSCHMCSIndex --Modulation and coding scheme index of data
              PUSCHSignatureIndex --Signature sequence index of data
              ...
          }
```

It should be noted that the foregoing manner of the transmission parameter configuration is merely a possible implementation, and this application is not limited thereto.

It should be understood that the foregoing lists an example of the correspondence between a random access preamble index and a transmission parameter configuration. For example, there may be a one-to-one correspondence between a random access preamble index and a transmission parameter configuration, or there may be a one-to-many correspondence between a random access preamble index and a transmission parameter configuration. This embodiment of this application is not limited to the foregoing two forms of correspondences. In this embodiment of this application, it is concerned that there is a correspondence (or an association relationship) between a random access preamble and a transmission parameter configuration, so that the terminal device #1 can determine a transmission parameter configuration based on the correspondence and a random access preamble index. For example, there may alternatively be a many-to-one correspondence between a random access preamble index and a transmission parameter configuration.

For example, when the network device #1 notifies the terminal device #1 to send both a random access preamble and data in the Msg1, the network device #1 may preconfigure a many-to-one correspondence between a random access preamble and a transmission parameter configuration. The correspondence may be preconfigured by using higher layer signaling, and the terminal device #1 prestores the correspondence. The DCI sent by the network device #1 to the terminal device #1 carries a random access preamble index, and the terminal device #1 determines a transmission parameter configuration based on the stored correspondence and the random access preamble index in the DCI. A data signal of the Msg1 may be generated based on the transmission parameter configuration.

The network device #1 notifies the terminal device #1 of information such as the random access preamble index in the DCI, so that the terminal device #1 determines the transmission parameter configuration based on the random access preamble index, the transmission parameter configuration index, and the correspondence. The transmission parameter configuration includes but is not limited to one or more of the following transmission parameter configurations: a time-frequency resource, a transmission waveform, a modulation and coding scheme, and a signature sequence of data. In this way, DCI signaling overheads caused by separately indicating a random access preamble and data can be reduced.

### Scenario B

The random access mode of the terminal device #1 is two-step random access, or the Msg1 sent by the terminal device #1 needs to carry data.

When the network device #1 determines that the random access mode of the terminal device #1 is two-step random access, or the Msg1 sent by the terminal device #1 carries data, in a first possible implementation, the network device #1 may send a transmission parameter configuration to the terminal device #1. The transmission parameter configuration may include but is not limited to one or more of information such as a time-frequency resource, a transmission waveform, a modulation and coding scheme, a HARQ process number, a new data indicator, a reference signal, and a signature sequence of data. In a second possible implementation, a group of transmission parameter configurations are preconfigured, and the terminal device #1 determines a transmission parameter configuration based on a transmission parameter configuration index. That the terminal device #1 determines a transmission parameter configuration based on a transmission parameter configuration index may be: determining one transmission parameter configuration from a plurality of transmission parameter configurations (or from a set (a set including a plurality of transmission parameter configurations) or from a group of transmission parameter configurations) based on the transmission parameter configuration index. Alternatively, the transmission parameter configuration determined by the terminal device #1 based on the transmission parameter configuration index may be a transmission parameter configuration indicated by the transmission parameter configuration index. The following describes in detail the second possible implementation.

```
          PUSCHInMsg1Config
              PUSCHConfigIndex --Transmission parameter configuration index
              PUSCHFreqResource --Frequency domain resource of data
              PUSCHTimeResource --Time domain resource of data
              PUSCHWaveform --Transmission waveform of data
              PUSCHDMRSIndex --Reference signal port index of data
              PUSCHMCSIndex --Modulation and coding scheme index of data
              PUSCHSignatureIndex --Signature sequence index of data
                   ... }
```

It should be noted that the foregoing manner of the transmission parameter configuration is merely a possible implementation, and this application is not limited thereto. The network device #1 notifies the terminal device #1 of information such as the transmission parameter configuration index in the DCI, so that the terminal device #1 determines the transmission parameter configuration based on the transmission parameter configuration index. The transmission parameter configuration includes but is not limited to one or more of the following transmission parameter configurations: a time-frequency resource, a transmission waveform, a modulation and coding scheme, and a signature sequence of data. In this way, signaling overheads caused by indicating a transmission parameter configuration can be reduced.

320: The terminal device #1 sends a random access preamble and/or data to the network device #1.

The terminal device #1 sends the random access preamble and/or the data in the Msg1 according to an indication of the DCI. In other words, when the DCI indicates that the random access mode of the terminal device #1 is sending only a random access preamble in the Msg1, the Msg1 sent by the terminal device #1 during random access carries the random access preamble. Alternatively, when the DCI indicates that the random access mode of the terminal device #1 is sending a random access preamble and data in the Msg1, the Msg1 sent by the terminal device #1 during random access carries the random access preamble and the data that needs to be sent by the terminal device #1 to the network device #1. Alternatively, when the DCI indicates that the random access mode of the terminal device #1 is sending only data in the Msg1, the Msg1 sent by the terminal device #1 during random access carries the data that needs to be sent by the terminal device #1 to the network device #1.

330: The network device #1 sends a random access response to the terminal device #1.

Optionally, the network device #1 sends the random access response information to the terminal device #1, and information carried in the random access response information is determined based on a result of processing the Msg1 by the network device #1.

The terminal device #1 sends the Msg1 according to an indication of the DCI, and the network device #1 sends the random access response based on the random access preamble and a receiving status of the data. Specifically, there are at least the following three scenarios.

### Scenario 1

The terminal device #1 sends only a random access preamble in the Msg1.

When the terminal device #1 sends only the random access preamble in the Msg1, the random access response sent by the network device #1 to the terminal device #1 may include a random access preamble index, timing advance information, uplink scheduling information, a cell radio network temporary identifier, and the like.

### Scenario 2

The terminal device #1 sends both a random access preamble and data in the Msg1.

When the terminal device #1 sends both the random access preamble and the data in the Msg1, the network device #1 first attempts to detect the random access preamble after receiving the Msg1. If detecting the random access preamble, the network device #1 demodulates the data.

If the network device #1 detects the random access preamble but fails to demodulate the data, the random access response sent to the terminal device #1 may include information such as a random access preamble index, timing advance information, uplink scheduling information, and a cell radio network temporary identifier. The uplink scheduling information may include a data retransmission indicator.

If the network device #1 detects the random access preamble and successfully demodulates the data, the random access response sent to the terminal device #1 may include a random access preamble index, timing advance information, an identifier of the terminal device #1, and the like. In this case, uplink scheduling information may not be sent.

If the network device #1 detects no random access preamble, the terminal device #1 initiates random access again.

### Scenario 3

The terminal device #1 sends only data in the Msg1.

When the terminal device #1 sends only the data in the Msg1, the network device #1 directly demodulates the data when receiving the Msg1. If the network device #1 successfully demodulates the data, the network device #1 sends timing advance information, an identifier of the terminal device #1, and the like to the terminal device #1. If the network device #1 fails to demodulate the data, the terminal device #1 initiates random access again.

It should be noted that the foregoing description is provided by using an example in which the control information is the DCI, and the "DCI" in the foregoing embodiment may also be replaced with "SCI".

Based on the technical solution in the foregoing case 1, the random access mode of the terminal device is indicated by adding a field to the control information (for example, DCI or SCI) or using different CRC scrambling sequences, so that the network device can flexibly adjust, based on a real-time load status, the random access mode used by the terminal device. In addition, the correspondence between a random access preamble index and a transmission parameter configuration in the Msg1 is preconfigured, so that signaling overheads for the control information can be reduced.

The foregoing describes, with reference to FIG. 7 and FIG. 8, the case in which the indication information is carried in the DCI. The following describes, with reference to FIG. 9 to FIG. 11, a case in which the indication information is carried in the MAC control element.

Case 2: The indication information is carried in the MAC control element.

Specifically, FIG. 9 is a schematic interaction diagram of a random access method 400 according to another embodiment of this application. The method 400 includes step 410 to step 430. The following describes each step in detail.

410: A network device #1 sends a MAC control element to a terminal device #1. The MAC control element is used to notify the terminal device #1 to perform a random access procedure and indicate a random access mode of the terminal device #1.

The network device #1 may indicate, by using the MAC control element, a random access mode used by the terminal device #1, so that the network device #1 can flexibly adjust, based on a real-time load status, the random access mode used by the terminal device #1, thereby improving communication efficiency.

The following specifically describes how to indicate, by using the MAC control element, a random access mode used by the terminal device #1.

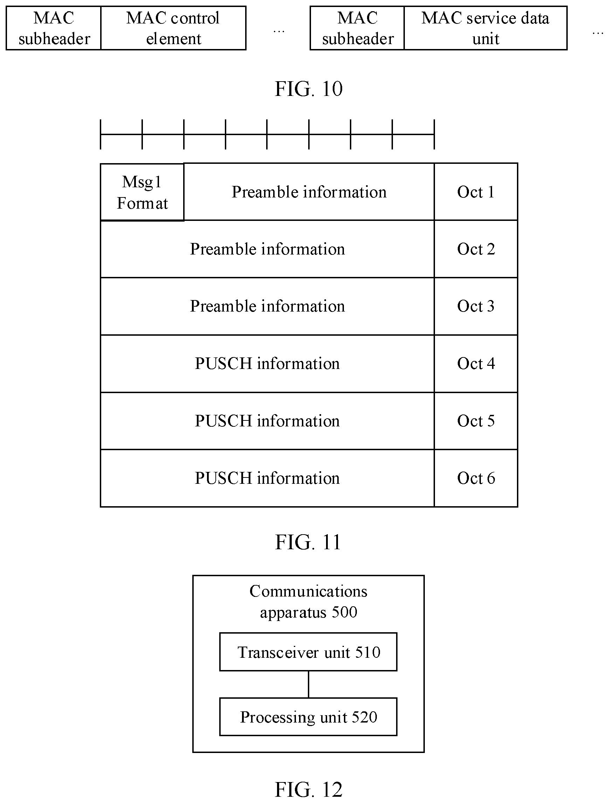

From a perspective of a MAC layer, the network device #1 sends a MAC protocol data unit (protocol data unit, PDU) to the terminal device #1. FIG. 10 is a schematic diagram of a format of a MAC protocol data unit. As shown in FIG. 10, the MAC protocol data unit includes one or more MAC control elements, and one or more MAC service data units (service data unit, SDU). Each control element has a corresponding subheader (that is, a MAC header), including a logical channel identifier (identifier, ID), which is used to indicate a type of the MAC control element, so that the terminal device #1 parses a bit in the MAC control element.

This embodiment of this application may provide a new MAC control element type, so as to flexibly indicate a random access procedure.

Optionally, the network device #1 indicates the random access mode of the terminal device #1 by using an information field (field) in the MAC control element, for example, one or more reserved bits in the MAC control element.

Specifically, the MAC control element includes one or more bits, which are used to indicate the random access mode of the terminal device #1. An example in which the network device #1 indicates a sending manner of a Msg1 in the random access procedure of the terminal device #1 is used for description.

In a possible implementation, one bit in the MAC control element is used to indicate the sending manner of the Msg1, where 0 corresponds to sending of only a random access preamble in the Msg1, and 1 corresponds to sending of a random access preamble and data in the Msg1; or 1 corresponds to sending of only a random access preamble in the Msg1, and 0 corresponds to sending of a random access preamble and data in the Msg1; or 0 corresponds to sending of only a random access preamble in the Msg1, and 1 corresponds to sending of only data in the Msg1; or 1 corresponds to sending of only a random access preamble in the Msg1, and 0 corresponds to sending of only data in the Msg1. It should be understood that a specific indication manner is not limited in this embodiment of this application.

In another possible implementation, a 2-bit field in the MAC control element is used to indicate the sending manner of the Msg1, where 00 corresponds to sending of only a random access preamble in the Msg1, 01 corresponds to sending of a random access preamble and data in the Msg1, and 10 corresponds to sending of only data in the Msg1; or 01 corresponds to sending of only a random access preamble in the Msg1, 10 corresponds to sending of a random access preamble and data in the Msg1, and 00 corresponds to sending of only data in the Msg1. It should be understood that a specific indication manner is not limited in this embodiment of this application.

The foregoing two possible implementations are merely examples for description. A specific quantity of bits that are used to indicate the sending manner of the Msg1 or a specific indication manner is not limited in this embodiment of this application.

In addition, in addition to the random access mode (for example, the sending manner of the Msg1) of the terminal device #1, the MAC control element may further include information about a random access preamble and data, for example, a random access preamble index, a UL/SUL indicator, an SS/PBCH index, a PRACH mask index, and a time-frequency resource, a transmission waveform, a modulation and coding scheme, a HARQ process index, a new data indicator, a redundancy version, a reference signal, and a power control indicator of data. FIG. 11 is a schematic diagram of a MAC control element applicable to an embodiment of this application. As shown in FIG. 11, the MAC control element may include a Msg1 format field, indicating that a Msg1 carries a random access preamble and/or data. The MAC control element may further include preamble information (preamble information) (that is, random access preamble information) and data information (that is, physical uplink shared channel information (physical uplink shared channel information, PUSCH information)).

In addition, in the case 2, the network device #1 may further indicate a transmission parameter configuration of the terminal device #1 by using the MAC control element. The following provides descriptions by using two scenarios.

### Scenario A

The random access mode of the terminal device #1 is two-step random access, or the Msg1 sent by the terminal device #1 needs to carry a random access preamble and data.

When the network device #1 determines that the random access mode of the terminal device #1 is two-step random access, or the Msg1 sent by the terminal device #1 needs to carry a random access preamble and data, in a first possible implementation, the network device #1 may separately indicate a random access preamble and a transmission parameter configuration. The transmission parameter configuration may include but is not limited to one or more of the following transmission parameter configurations: a time-frequency resource, a transmission waveform, a modulation and coding scheme, a HARQ process number, a new data indicator, a reference signal, and a signature sequence of data. In a second possible implementation, a correspondence between a random access preamble and a transmission parameter configuration is preconfigured, and the terminal device #1 determines a transmission parameter configuration based on the correspondence and a random access preamble index. The following describes in detail the second possible implementation.

Optionally, there is a one-to-one correspondence between a random access preamble index and a transmission parameter configuration.

When the network device #1 notifies the terminal device #1 to send both a random access preamble and data in the Msg1, the network device #1 may preconfigure a correspondence between a random access preamble and a transmission parameter configuration, so that different random access preambles correspond to different transmission parameter configurations. The correspondence may be a one-to-one correspondence between a random access preamble index and a transmission parameter configuration. The correspondence may be preconfigured by using higher layer signaling, and the terminal device #1 prestores the correspondence. The MAC control element sent by the network device #1 to the terminal device #1 carries a random access preamble index, and the terminal device #1 determines a transmission parameter configuration based on the stored correspondence and the random access preamble index in the MAC control element. A data signal of the Msg1 may be generated based on the transmission parameter configuration.

There is a one-to-one correspondence between a random access preamble index and a transmission parameter configuration. For example, configuration may be performed in the following manner:

```
          PRACH-Config {
              PreambleIndex, --Random access preamble index
              PUSCHFreqResource --Frequency domain resource of data
              PUSCHTimeResource --Time domain resource of data
              PUSCHWaveform --Transmission waveform of data
              PUSCHMCSIndex --Modulation and coding scheme index of data
              PUSCHHARQID --HARQ process number of data
              PUSCHDMRSIndex --Reference signal port index of data
              PUSCHSignatureIndex --Signature sequence index of data
              ...
          }
```

The frequency domain resource of the data indicates a frequency domain resource that can be used for data corresponding to the random access preamble index. The time domain resource of the data indicates a time domain resource that can be used for data corresponding to the random access preamble index. The transmission waveform of the data indicates a waveform that can be used for data corresponding to the random access preamble index. The modulation and coding scheme of the data indicates a modulation order and a channel coding rate that can be used for data corresponding to the random access preamble index. The HARQ process number of the data indicates a HARQ process number that can be used for data corresponding to the random access preamble index. The reference signal port index of the data indicates a reference signal index that can be used for data corresponding to the random access preamble index. The signature sequence index of the data indicates a signature sequence index that can be used for data corresponding to the random access preamble index. The correspondence may be a one-to-one correspondence designed based on an index, or may be a one-to-one correspondence sorted in order. Sorting in order may be implementing a correspondence in ascending or descending order of indexes, that is, sorting in ascending or descending order of random access preamble indexes. Random access preamble indexes one-to-one correspond to different transmission parameter configurations according to a sorting order.

It should be noted that the foregoing manner of the transmission parameter configuration is merely a possible implementation, and this application is not limited thereto.

Optionally, there is a one-to-many correspondence between a random access preamble index and a transmission parameter configuration.

When the network device #1 notifies the terminal device #1 to send both a random access preamble and data in the Msg1, the network device #1 may preconfigure a correspondence between a random access preamble and a transmission parameter configuration, so that different random access preambles correspond to different transmission parameter configurations. The correspondence may be a one-to-many correspondence between a random access preamble index and a transmission parameter configuration, that is, one random access preamble index corresponds to a plurality of transmission parameter configurations. The correspondence may be preconfigured by using higher layer signaling, and the terminal device #1 prestores the correspondence. The MAC control element sent by the network device #1 to the terminal device #1 carries a random access preamble index and a transmission parameter configuration index, and a target transmission parameter configuration is determined based on the transmission parameter configuration index. In a possible implementation, the terminal device #1 determines a plurality of transmission parameter configurations based on the stored correspondence and the random access preamble index in the MAC control element, and then determines the target transmission parameter configuration from the plurality of transmission parameter configurations based on the transmission parameter configuration index. In another possible implementation, the terminal device #1 determines the target transmission parameter configuration from a plurality of transmission parameter configurations based on the transmission parameter configuration index, that is, the target transmission parameter configuration is a transmission parameter configuration indicated by the transmission parameter configuration index.

There is a one-to-many correspondence between a random access preamble index and a transmission parameter configuration. For example, configuration may be performed in the following manner:

```
          PRACH-Config {
              PreambleIndex, --Random access preamble index
              PUSCHInMsg1List (1..MaxNrofPUSCHInMsg1) OF PUSCHInMsg1Config
          --Transmission parameter configuration
              ...
          }
          PUSCHInMsg1Config
              PUSCHConfigIndex --Transmission parameter configuration index
              PUSCHFreqResource --Frequency domain resource of data
              PUSCHTimeResource --Time domain resource of data
              PUSCHWaveform --Transmission waveform of data
              PUSCHHARQID --HARQ process number of data
              PUSCHDMRSIndex --Reference signal port index of data
              PUSCHMCSIndex --Modulation and coding scheme index of data
              PUSCHSignatureIndex --Signature sequence index of data
                   ...
          }
```

It should be noted that the foregoing manner of the transmission parameter configuration is merely a possible implementation, and this application is not limited thereto.

The network device #1 notifies the terminal device #1 of information such as the random access preamble index in the MAC control element, so that the terminal device #1 determines the transmission parameter configuration based on the random access preamble index, the transmission parameter configuration index, and the correspondence. The transmission parameter configuration includes but is not limited to one or more of the following transmission parameter configurations: a time-frequency resource, a transmission waveform, a modulation and coding scheme, and a signature sequence of data. In this way, MAC control element signaling overheads caused by separately indicating a random access preamble and data can be reduced.

### Scenario B

The random access mode of the terminal device #1 is two-step random access, or the Msg1 sent by the terminal device #1 needs to carry data.

When the network device #1 determines that the random access mode of the terminal device #1 is two-step random access, or the Msg1 sent by the terminal device #1 carries data, in a first possible implementation, the network device #1 may send a transmission parameter configuration to the terminal device #1. The transmission parameter configuration may include but is not limited to one or more of information such as a time-frequency resource, a transmission waveform, a modulation and coding scheme, a HARQ process number, a new data indicator, a reference signal, and a signature sequence of data. In a second possible implementation, a group of transmission parameter configurations are preconfigured, and the terminal device #1 determines a transmission parameter configuration based on a transmission parameter configuration index. That the terminal device #1 determines a transmission parameter configuration based on a transmission parameter configuration index may be: determining one transmission parameter configuration from a plurality of transmission parameter configurations (or from a set (a set including a plurality of transmission parameter configurations) or from a group of transmission parameter configurations) based on the transmission parameter configuration index. Alternatively, the transmission parameter configuration determined by the terminal device #1 based on the transmission parameter configuration index may be a transmission parameter configuration indicated by the transmission parameter configuration index. The following describes in detail the second possible implementation.

```
          PUSCHInMsg1Config
              PUSCHConfigIndex --Transmission parameter configuration index
              PUSCHFreqResource --Frequency domain resource of data
              PUSCHTimeResource --Time domain resource of data
              PUSCHWaveform --Transmission waveform of data
              PUSCHDMRSIndex --Reference signal port index of data
              PUSCHMCSIndex --Modulation and coding scheme index of data
              PUSCHSignatureIndex --Signature sequence index of data
                   ...
          }
```

It should be noted that the foregoing manner of the transmission parameter configuration is merely a possible implementation, and this application is not limited thereto. The network device #1 notifies the terminal device #1 of information such as the transmission parameter configuration index in the MAC control element, so that the terminal device #1 determines the transmission parameter configuration based on the transmission parameter configuration index. The transmission parameter configuration includes but is not limited to one or more of the following transmission parameter configurations: a time-frequency resource, a transmission waveform, a modulation and coding scheme, and a signature sequence of data. In this way, signaling overheads caused by indicating a transmission parameter configuration can be reduced.

420: The terminal device #1 sends a random access preamble and/or data to the network device #1.

The terminal device #1 sends the random access preamble and/or the data in the Msg1 according to an indication of the MAC control element. In other words, when the MAC control element indicates that the random access mode of the terminal device #1 is sending only a random access preamble in the Msg1, the Msg1 sent by the terminal device #1 during random access carries the random access preamble. Alternatively, when the MAC control element indicates that the random access mode of the terminal device #1 is sending a random access preamble and data in the Msg1, the Msg1 sent by the terminal device #1 during random access carries the random access preamble and the data that needs to be sent by the terminal device #1 to the network device #1. Alternatively, when the MAC control element indicates that the random access mode of the terminal device #1 is sending only data in the Msg1, the Msg1 sent by the terminal device #1 during random access carries the data that needs to be sent by the terminal device #1 to the network device #1.

430: The network device #1 sends a random access response to the terminal device #1.

Optionally, the network device #1 sends the random access response information to the terminal device #1, and information carried in the random access response information is determined based on a result of processing the Msg1 by the network device #1.

The terminal device #1 sends the Msg1 according to an indication of the MAC control element, and the network device #1 sends the random access response based on the random access preamble and a receiving status of the data. Specifically, there are at least three scenarios. The three scenarios are similar to the foregoing three scenarios (the scenario 1, the scenario 2, and the scenario 3 in step 330). The foregoing three scenarios have been described in detail when the foregoing step 330 is described. In this case, for brevity, details are not described again.

Based on the technical solution in the foregoing case 2, the network device indicates the random access mode of the terminal device by using the MAC control element, so that the network device can flexibly adjust, based on a real-time load status, the random access mode used by the terminal device, thereby improving communication efficiency.

The foregoing describes in detail the random access method provided in the embodiments of this application with reference to FIG. 6 to FIG. 11.

It should be noted that the embodiments of this application are not limited to that the random access mode is indicated by using the DCI in the case 1 or the MAC control element in the case 2, and any random access mode that can be quickly notified to the terminal device falls within the protection scope of the embodiments of this application.

Based on the foregoing technical solution, the network device #1 may indicate the random access mode of the terminal device #1 by sending, to the terminal device #1, the indication information carried in non-higher layer signaling. The non-higher layer signaling may be control information, for example, DCI or SCI, or the non-higher layer signaling may be a MAC control element. The random access mode may include two-step random access and four-step random access, or the random access mode may include content (for example, only a random access preamble, or only data, or both a random access preamble and data) carried in the Msg1 in the random access procedure. A random access mode specifically used by the terminal device #1 may be determined by the network device #1 based on some factors. For example, the network device #1 may determine, based on a network status or a service type of the terminal device #1, a random access mode used by the terminal device #1. In addition, the random access mode of the terminal device #1 may be indicated in real time by using the non-higher layer signaling, thereby improving communication efficiency, and improving user experience.

The following describes in detail a communications apparatus provided in the embodiments of this application with reference to FIG. 12 to FIG. 14.

FIG. 12 is a schematic block diagram of a communications apparatus according to an embodiment of this application. As shown in FIG. 12, the communications apparatus 500 may include a transceiver unit 510 and a processing unit 520.

In a possible design, the communications apparatus 500 may correspond to the terminal device in the foregoing method embodiments, for example, may be the terminal device or a chip configured in the terminal device.

In a possible implementation, the transceiver unit 510 is configured to receive non-higher layer signaling sent by a first wireless device, where the non-higher layer signaling is physical layer control information or a MAC control element. The processing unit 520 is configured to: obtain indication information from the non-higher layer signaling, where the indication information is used to indicate a random access mode; and generate a Msg1 based on the indication information. The transceiver unit 510 is further configured to send the Msg1 to the first wireless device.

Optionally, the processing unit 520 is specifically configured to generate, based on the indication information, a Msg1 that carries a random access preamble; or generate, based on the indication information, a Msg1 that carries a random access preamble and data; or generate, based on the indication information, a Msg1 that carries data.

Optionally, the indication information is carried in one or more reserved bits in the physical layer control information or the MAC control element.

Optionally, the processing unit 520 is specifically configured to: determine a scrambling sequence used to scramble a CRC bit in the physical layer control information, where the indication information is specifically the determined scrambling sequence. The processing unit 520 is specifically configured to generate the Msg1 based on a random access mode corresponding to the determined scrambling sequence.

Optionally, the indication information specifically indicates that the random access mode is sending a Msg1 that carries a random access preamble and data, and the physical layer control information or the MAC control element further carries a random access preamble index. The processing unit 520 is further configured to determine, based on the random access preamble index, a transmission parameter configuration that is associated with the random access preamble index and that is used to transmit the data. The transceiver unit 510 is further configured to send the data in the Msg1 to the first wireless device based on the determined transmission parameter configuration used to transmit the data.

Optionally, the indication information specifically indicates that the random access mode is sending a Msg1 that carries a random access preamble and data, the physical layer control information or the MAC control element further carries a random access preamble index and a transmission parameter configuration index, and the transmission parameter configuration index is used to determine one or more transmission parameter configurations used to transmit the data. The transceiver unit 510 is further configured to send the data in the Msg1 to the first wireless device based on the transmission parameter configuration determined by the transmission parameter configuration index.

Optionally, the indication information specifically indicates that the random access mode is sending a Msg1 that carries data, the physical layer control information or the MAC control element further carries a transmission parameter configuration index, and the transmission parameter configuration index is used to determine one or more transmission parameter configurations used to transmit the data. The transceiver unit 510 is further configured to send the data in the Msg1 to the first wireless device based on the transmission parameter configuration determined by the transmission parameter configuration index.

Optionally, the transmission parameter configuration used to transmit the data includes at least one of the following transmission parameter configurations: a time-frequency resource, a transmission waveform, a modulation and coding scheme, a hybrid automatic repeat request HARQ process number, a reference signal, and a signature sequence of the data.

Specifically, the communications apparatus 500 may correspond to the terminal device in the method 200, the method 300, and the method 400 in the embodiments of this application. The communications apparatus 500 may include units configured to perform the method 200 in FIG. 6, the method 300 in FIG. 7, and the method 400 in FIG. 9 performed by the terminal device. In addition, the units in the communications apparatus 500 and the foregoing other operations and/or functions are respectively intended to implement corresponding procedures of the method 200 in FIG. 6, the method 300 in FIG. 7, and the method 400 in FIG. 9.

When the communications apparatus 500 is configured to perform the method 200 in FIG. 6, the transceiver unit 510 may be configured to perform step 210 and step 220 in the method 200. The processing unit 520 may be configured to perform related steps in the method 200 in which the terminal device determines, based on the received indication, content that needs to be carried in the Msg1, and the terminal device determines the transmission parameter configuration based on the received correspondence. It should be understood that a specific process in which the units perform the foregoing corresponding steps has been described in detail in the foregoing method embodiments. For brevity, details are not described herein again.

When the communications apparatus 500 is configured to perform the method 300 in FIG. 7, the transceiver unit 510 may be configured to perform step 310, step 320, and step 330 in the method 300. The processing unit 520 may be configured to perform related steps in the method 300 in which the terminal device determines, based on the received indication, content that needs to be carried in the Msg1, and the terminal device determines the transmission parameter configuration based on the received correspondence. It should be understood that a specific process in which the units perform the foregoing corresponding steps has been described in detail in the foregoing method embodiments. For brevity, details are not described herein again.

When the communications apparatus 500 is configured to perform the method 400 in FIG. 9, the transceiver unit 510 may be configured to perform step 410, step 420, and step 430 in the method 400. The processing unit 520 may be configured to perform related steps in the method 400 in which the terminal device determines, based on the received indication, content that needs to be carried in the Msg1, and the terminal device determines the transmission parameter configuration based on the received correspondence. It should be understood that a specific process in which the units perform the foregoing corresponding steps has been described in detail in the foregoing method embodiments. For brevity, details are not described herein again.

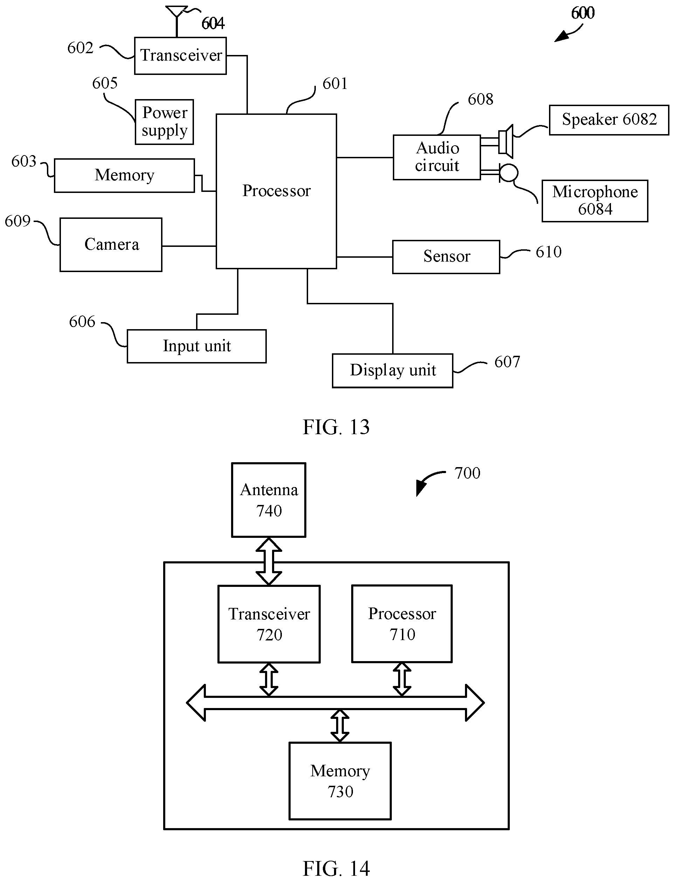

It should be further understood that the transceiver unit in the communications apparatus 500 may correspond to the transceiver 602 in the terminal device 600 shown in FIG. 13, and the processing unit 520 in the communications apparatus 500 may correspond to the processor 601 in the terminal device 600 shown in FIG. 13.

In another possible design, the communications apparatus 500 may correspond to the network device in the foregoing method embodiments, for example, may be the network device or a chip configured in the network device.

In a possible implementation, the processing unit 520 is configured to generate indication information, where the indication information is used to indicate a random access mode of the second wireless device. The transceiver unit 510 is configured to send the indication information to a second wireless device, where the indication information is carried in physical layer control information or a MAC control element. The transceiver unit 510 is further configured to receive a Msg1 sent by the second wireless device in a random access procedure.

Optionally, the random access mode includes any one of the following: sending a Msg1 that carries a random access preamble; or sending a Msg1 that carries a random access preamble and data; or sending a Msg1 that carries data.

Optionally, the indication information is carried in one or more reserved bits in the physical layer control information or the MAC control element.

Optionally, the processing unit 520 is further configured to scramble a cyclic redundancy check CRC bit in the physical layer control information by using one of at least two scrambling sequences, where different scrambling sequences in the at least two scrambling sequences correspond to different random access modes. The indication information is specifically the scrambling sequence used to scramble the CRC bit in the physical layer control information.

Optionally, the indication information specifically indicates that the random access mode of the second wireless device is sending a Msg1 that carries a random access preamble and data; and the physical layer control information or the MAC control element further carries a random access preamble index, and the random access preamble index is used to determine the random access preamble and a transmission parameter configuration used to the transmit data.

Optionally, the indication information specifically indicates that the random access mode of the second wireless device is sending a Msg1 that carries a random access preamble and data; and the physical layer control information or the MAC control element further carries a random access preamble index and a transmission parameter configuration index, and the transmission parameter configuration index indicates one or more transmission parameter configurations used to transmit the data.

Optionally, the indication information specifically indicates that the random access mode of the second wireless device is sending a Msg1 that carries data; and the physical layer control information or the MAC control element further carries a transmission parameter configuration index, and the transmission parameter configuration index is used to indicate one or more transmission parameter configurations used to transmit the data.

Optionally, the transmission parameter configuration used to transmit the data includes at least one of the following transmission parameter configurations: a time-frequency resource, a transmission waveform, a modulation and coding scheme, a hybrid automatic repeat request HARQ process number, a reference signal, and a signature sequence of the data.

Specifically, the communications apparatus 500 may correspond to the network device in the method 200, the method 300, and the method 400 in the embodiments of this application. The communications apparatus 500 may include units configured to perform the method 200 in FIG. 6, the method 300 in FIG. 7, and the method 400 in FIG. 9 performed by the network device. In addition, the units in the communications apparatus 500 and the foregoing other operations and/or functions are respectively intended to implement corresponding procedures of the method 200 in FIG. 6, the method 300 in FIG. 7, and the method 400 in FIG. 9.

When the communications apparatus 500 is configured to perform the method 200 in FIG. 6, the transceiver unit 510 may be configured to perform step 210 and step 220 in the method 200. The processing unit 520 may be configured to perform related steps of determining the random access mode of the terminal device and processing the received random access preamble and/or the received data in the method 200. It should be understood that a specific process in which the units perform the foregoing corresponding steps has been described in detail in the foregoing method embodiments. For brevity, details are not described herein again.

When the communications apparatus 500 is configured to perform the method 300 in FIG. 7, the transceiver unit 510 may be configured to perform step 310, step 320, and step 330 in the method 300. The processing unit 520 may be configured to perform related steps of determining the random access mode of the terminal device and processing the received random access preamble and/or the received data in the method 300. It should be understood that a specific process in which the units perform the foregoing corresponding steps has been described in detail in the foregoing method embodiments. For brevity, details are not described herein again.

When the communications apparatus 500 is configured to perform the method 400 in FIG. 9, the transceiver unit 510 may be configured to perform step 410, step 420, and step 430 in the method 400. The processing unit 520 may be configured to perform related steps of determining the random access mode of the terminal device and processing the received random access preamble and/or the received data in the method 400. It should be understood that a specific process in which the units perform the foregoing corresponding steps has been described in detail in the foregoing method embodiments. For brevity, details are not described herein again.

It should be further understood that the transceiver unit 510 in the communications apparatus 500 may correspond to the transceiver 720 in the network device 700 shown in FIG. 14, and the processing unit 520 in the communications apparatus 500 may correspond to the processor 710 in the network device 700 shown in FIG. 14.

FIG. 13 is a schematic structural diagram of a terminal device 600 according to an embodiment of this application. As shown in FIG. 13, the terminal device 600 includes a processor 601 and a transceiver 602. Optionally, the terminal device 600 further includes a memory 603. The processor 602, the transceiver 602, and the memory 603 communicate with each other by using an internal connection path, to transfer a control signal and/or a data signal. The memory 603 is configured to store a computer program. The processor 601 is configured to invoke the computer program from the memory 603 and run the computer program, to control the transceiver 602 to receive/send a signal. Optionally, the terminal device 600 may further include an antenna 604, configured to send, by using a radio signal, uplink data or uplink control signaling that is output by the transceiver 602.

The processor 601 and the memory 603 may be integrated into one processing apparatus. The processor 601 is configured to execute program code stored in the memory 603, to implement the foregoing functions. During specific implementation, the memory 603 may alternatively be integrated into the processor 601, or may be independent of the processor 601.

When the program instruction stored in the memory 603 is executed by the processor 601, the processor 601 is configured to control the transceiver 602 to receive physical layer control information or a MAC control element, and determine, based on the physical layer control information or the MAC control element, content that needs to be carried in a Msg1.

Specifically, the terminal device 600 may correspond to the terminal device in the method 200, the method 300, and the method 400 in the embodiments of this application. The terminal device 600 may include units configured to perform the method 200 in FIG. 6, the method 300 in FIG. 7, and in the method 400 in FIG. 9 performed by the terminal device. In addition, the units in the terminal device 600 and the foregoing other operations and/or functions are respectively intended to implement corresponding procedures of the method 200 in FIG. 6, the method 300 in FIG. 7, and the method 400 in FIG. 9.

The processor 601 may be configured to perform an action that is implemented inside the terminal device and that is described in the foregoing method embodiments, and the transceiver 602 may be configured to perform an action of receiving or sending that is performed by the terminal device from or to the network device and that is described in the foregoing method embodiments. For details, refer to the descriptions in the foregoing method embodiments. Details are not described herein again.

Optionally, the terminal device 600 may further include a power supply 605, configured to supply power to various components or circuits in the terminal device.

In addition, to implement more functions of the terminal device, the terminal device 600 may further include one or more of an input unit 606, a display unit 607, an audio circuit 608, a camera 609, a sensor 610, and the like, and the audio circuit may further include a speaker 6082, a microphone 6084, and the like.

FIG. 14 is a schematic structural diagram of a network device 700 according to an embodiment of this application. As shown in FIG. 14, the network device 700 includes a processor 710 and a transceiver 720. Optionally, the network device 700 further includes a memory 730. The processor 710, the transceiver 720, and the memory 730 communicate with each other by using an internal connection path, to transfer a control signal and/or a data signal. The memory 730 is configured to store a computer program. The processor 710 is configured to invoke the computer program from the memory 730 and run the computer program, to control the transceiver 720 to send and receive a signal.

The processor 710 and the memory 730 may be integrated into one processing apparatus. The processor 710 is configured to execute program code stored in the memory 730 to implement the foregoing functions. During specific implementation, the memory 730 may alternatively be integrated into the processor 710, or may be independent of the processor 710.

The network device 700 may further include an antenna 740, configured to send, by using a radio signal, downlink data or downlink control signaling that is output by the transceiver 720.

When the program instruction stored in the memory 730 is executed by the processor 710, the processor 710 is configured to control the transceiver 720 to send a physical layer control information or a MAC control element, where the physical layer or the MAC control element carries indication information indicating a random access mode. The processor 710 is further configured to control the transceiver 720 to receive a Msg1.

Specifically, the network device 700 may correspond to the network device in the method 200, the method 300, and the method 400 in the embodiments of this application. The network device 700 may include units configured to perform the method 200 in FIG. 6, the method 300 in FIG. 7, and the method 400 in FIG. 9 performed by the network device. In addition, the units in the network device 700 and the foregoing other operations and/or functions are respectively intended to implement corresponding procedures of the method 200 in FIG. 6, the method 300 in FIG. 7, and the method 400 in FIG. 9. A specific process in which the units perform the foregoing corresponding steps has been described in detail in the foregoing method embodiments. For brevity, details are not described herein again.

The processor 710 may be configured to perform an action that is implemented inside the network device and that is described in the foregoing method embodiments, and the transceiver 720 may be configured to perform an action of receiving or sending that is performed by the network device from or to the terminal device and that is described in the foregoing method embodiments. For details, refer to the descriptions in the foregoing method embodiments. Details are not described herein again.

It should be understood that the processor in the embodiments of this application may be a central processing unit (central processing unit, CPU). The processor may alternatively be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or a transistor logic device, discrete hardware component, or the like.

It should be further understood that the memory in the embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which is used as an external cache. By way of an example rather than a limitation, random access memories (random access memory, RAM) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

According to the methods provided in the embodiments of this application, this application further provides a computer program product. The computer program product includes computer program code. When the computer program code is run on a computer, the computer is enabled to perform the methods in the embodiments shown in FIG. 6, FIG. 7, and FIG. 9.

According to the methods provided in the embodiments of this application, this application further provides a computer-readable medium. The computer-readable medium stores program code. When the program code is run on a computer, the computer is enabled to perform the methods in the embodiments shown in FIG. 6, FIG. 7, and FIG. 9.

According to the methods provided in the embodiments of this application, this application further provides a system. The system includes the foregoing one or more terminal devices and the foregoing one or more network devices.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on a particular application and a design constraint condition of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, function units in the embodiments of this application may be integrated into one processing unit, or each of the units may exist physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. The protection scope of this application shall be subject to the protection scope of the claims.

## Claims

1. A communications apparatus, comprising a transceiver unit and a processing unit, wherein
the processing unit is configured to generate indication information;
the transceiver unit is configured to send the indication information to a second wireless device, wherein the indication information is used to indicate a random access mode of the second wireless device, and the indication information is carried in physical layer control information or a media access control MAC control element, and wherein the indication information is carried in one or more reserved bits in the physical layer control information or the MAC control element; and
the transceiver unit is further configured to receive a first message Msg1 sent by the second wireless device in a random access procedure in accordance with the indicated random access mode of the second wireless device; and
wherein the random access mode comprises any one of the following:
sending a Msg1 that carries a random access preamble; or
sending a Msg1 that carries a random access preamble and data; or
sending a Msg1 that carries data.

2. The communications apparatus according to claim 1, wherein the indication information specifically indicates that the random access mode of the second wireless device is sending a Msg1 that carries a random access preamble and data; and
the physical layer control information or the MAC control element further carries a random access preamble index, and the random access preamble index is used to determine the random access preamble and a transmission parameter configuration used to transmit the data.

3. The communications apparatus according to claim 1, wherein the indication information specifically indicates that the random access mode of the second wireless device is sending a Msg1 that carries a random access preamble and data; and
the physical layer control information or the MAC control element further carries a random access preamble index and a transmission parameter configuration index, and the transmission parameter configuration index indicates one or more transmission parameter configurations used to transmit the data.

4. The communications apparatus according to claim 1, wherein the indication information specifically indicates that the random access mode of the second wireless device is sending a Msg1 that carries data; and
the physical layer control information or the MAC control element further carries a transmission parameter configuration index, and the transmission parameter configuration index is used to indicate one or more transmission parameter configurations used to transmit the data.

5. A communications apparatus, comprising a transceiver unit and a processing unit, wherein
the transceiver unit is configured to obtain indication information sent by a first wireless device, wherein the indication information is used to indicate a random access mode of the communications apparatus, and the indication information is carried in physical layer control information or a media access control MAC control element, and wherein the indication information is carried in one or more reserved bits in the physical layer control information or the MAC control element;
the processing unit is configured to generate a first message Msg1 based on the indication information; and
the transceiver unit is further configured to send the Msgl to the first wireless device based on the indication information; and
wherein the processing unit is specifically configured to:
generate, based on the indication information, a Msg1 that carries a random access preamble; or
generate, based on the indication information, a Msg1 that carries a random access preamble and data; or
generate, based on the indication information, a Msgl that carries data.

6. The communications apparatus according to claim 5, wherein the indication information specifically indicates that the random access mode is sending a Msgl that carries a random access preamble and data, and the physical layer control information or the MAC control element further carries a random access preamble index;
the processing unit is further configured to determine, based on the random access preamble index, a transmission parameter configuration that is associated with the random access preamble index and that is used to transmit the data; and
the transceiver unit is configured to send the data in the Msgl to the first wireless device based on the determined transmission parameter configuration used to transmit the data.

7. The communications apparatus according to claim 5, wherein the indication information specifically indicates that the random access mode is sending a Msgl that carries a random access preamble and data, the physical layer control information or the MAC control element further carries a random access preamble index and a transmission parameter configuration index, and the transmission parameter configuration index is used to indicate one or more transmission parameter configurations used to transmit the data; and
the transceiver unit is configured to send the data in the Msg1 to the first wireless device based on the transmission parameter configuration indicated by the transmission parameter configuration index.

8. The communications apparatus according to claim 5, wherein the indication information specifically indicates that the random access mode is sending a Msgl that carries data, the physical layer control information or the MAC control element further carries a transmission parameter configuration index, and the transmission parameter configuration index is used to indicate one or more transmission parameter configurations used to transmit the data; and
the transceiver unit is configured to send the data in the Msg1 to the first wireless device based on the transmission parameter configuration indicated by the transmission parameter configuration index.

9. A random access method, comprising:
sending (210), by a first wireless device, indication information to a second wireless device, wherein the indication information is used to indicate a random access mode of the second wireless device, and the indication information is carried in physical layer control information or a media access control MAC control element, and wherein the indication information is carried in one or more reserved bits in the physical layer control information or the MAC control element ; and
receiving (220), by the first wireless device, a first message Msg1 sent by the second wireless device in a random access procedure in accordance with the indicated random access mode of the second wireless device; and
wherein the random access mode comprises any one of the following:
sending a Msg1 that carries a random access preamble; or
sending a Msgl that carries a random access preamble and data; or
sending a Msgl that carries data.

## Patentansprüche

1. Kommunikationsvorrichtung, umfassend eine Sende-/Empfangseinheit und eine Verarbeitungseinheit, wobei die Verarbeitungseinheit dazu konfiguriert ist, Angabeinformationen zu generieren;
die Sende-/Empfangseinheit dazu konfiguriert ist, die Angabeinformationen an eine zweite drahtlose Vorrichtung zu senden, wobei die Angabeinformationen dazu verwendet werden, einen Direktzugriffsmodus der zweiten drahtlosen Vorrichtung anzugeben, und die Angabeinformationen in Steuerinformationen der physischen Schicht oder einem Medienzugriffssteuerungs (media access control, MAC)-Steuerelement getragen werden, und wobei die Angabeinformationen in einem oder mehreren reservierten Bits in den Steuerinformationen der physischen Schicht oder dem MAC-Steuerelement getragen werden; und
die Sende-/Empfangseinheit ferner dazu konfiguriert ist, eine erste Nachricht Msgl zu empfangen, die durch die zweite drahtlose Vorrichtung in einer Direktzugriffsprozedur gemäß dem angegebenen Direktzugriffsmodus der zweiten drahtlosen Vorrichtung gesendet wird; und
wobei der Direktzugriffsmodus ein beliebiges von Folgendem umfasst:
Senden einer Msgl, die eine Direktzugriffspräambel trägt; oder
Senden einer Msgl, die eine Direktzugriffspräambel und Daten trägt; oder
Senden einer Msgl, die Daten trägt.

2. Kommunikationsvorrichtung gemäß Anspruch 1, wobei die Angabeinformationen speziell angeben, dass der Direktzugriffsmodus der zweiten drahtlosen Vorrichtung eine Msgl sendet, die eine Direktzugriffspräambel und Daten trägt; und
die Steuerinformationen der physischen Schicht oder das MAC-Steuerelement ferner einen Direktzugriffspräambelindex tragen, und der Direktzugriffspräambelindex zum Bestimmen der Direktzugriffspräambel und einer Übertragungsparameterkonfiguration verwendet wird, die zum Übertragen der Daten verwendet wird.

3. Kommunikationsvorrichtung gemäß Anspruch 1, wobei die Angabeinformationen speziell angeben, dass der Direktzugriffsmodus der zweiten drahtlosen Vorrichtung eine Msgl sendet, die eine Direktzugriffspräambel und Daten trägt; und
die Steuerinformationen der physischen Schicht oder das MAC-Steuerelement ferner einen Direktzugriffspräambelindex und einen Übertragungsparameterkonfigurationsindex tragen, und der Übertragungsparameterkonfigurationsindex eine oder mehrere Übertragungsparameterkonfigurationen angibt, die zum Übertragen der Daten verwendet werden.

4. Kommunikationsvorrichtung gemäß Anspruch 1, wobei die Angabeinformationen speziell angeben, dass der Direktzugriffsmodus der zweiten drahtlosen Vorrichtung eine Msgl sendet, die Daten trägt; und
die Steuerinformationen der physischen Schicht oder das MAC-Steuerelement ferner einen Übertragungsparameterkonfigurationsindex tragen, und der Übertragungsparameterkonfigurationsindex dazu verwendet wird, eine oder mehrere Übertragungsparameterkonfigurationen anzugeben, die zum Übertragen der Daten verwendet werden.

5. Kommunikationsvorrichtung, umfassend eine Sende-/Empfangseinheit und eine Verarbeitungseinheit, wobei
die Sende-/Empfangseinheit dazu konfiguriert ist, Angabeinformationen zu erlangen, die durch eine erste drahtlose Vorrichtung gesendet werden, wobei die Angabeinformationen dazu verwendet werden, einen Direktzugriffsmodus der Kommunikationsvorrichtung anzugeben, und die Angabeinformationen in Steuerinformationen der physischen Schicht oder einem Medienzugriffssteuerungs- (MAC)-Steuerelement getragen werden, und wobei die Angabeinformationen in einem oder mehreren reservierten Bits in den Steuerinformationen der physischen Schicht oder dem MAC-Steuerelement getragen werden;
die Verarbeitungseinheit dazu konfiguriert ist, basierend auf den Angabeinformationen eine erste Nachricht Msgl zu generieren; und
die Sende-/Empfangseinheit ferner dazu konfiguriert ist, basierend auf den Angabeinformationen die Msgl an die erste drahtlose Vorrichtung zu senden; und
wobei die Verarbeitungseinheit speziell zu Folgendem konfiguriert ist:
Generieren einer Msgl, die eine Direktzugriffspräambel trägt, basierend auf den Angabeinformationen; oder
Generieren einer Msgl, die eine Direktzugriffspräambel und Daten trägt, basierend auf den Angabeinformationen; oder
Generieren einer Msgl, die Daten trägt, basierend auf den Angabeinformationen.

6. Kommunikationsvorrichtung gemäß Anspruch 5, wobei die Angabeinformationen speziell angeben, dass der Direktzugriffsmodus eine Msgl sendet, die eine Direktzugriffspräambel und Daten trägt, und die Steuerinformationen der physischen Schicht oder das MAC-Steuerelement ferner einen Direktzugriffspräambelindex tragen;
wobei die Verarbeitungseinheit ferner dazu konfiguriert ist, basierend auf dem Direktzugriffspräambelindex eine Übertragungsparameterkonfiguration zu bestimmen, die mit dem Direktzugriffspräambelindex verknüpft ist und die zum Übertragen der Daten verwendet wird; und
wobei die Sende-/Empfangseinheit dazu konfiguriert ist, die Daten in der Msgl basierend auf der bestimmten Übertragungsparameterkonfiguration, die zum Übertragen der Daten verwendet wird, an die erste drahtlose Vorrichtung zu senden.

7. Kommunikationsvorrichtung gemäß Anspruch 5, wobei die Angabeinformationen speziell angeben, dass der Direktzugriffsmodus eine Msgl sendet, die eine Direktzugriffspräambel und Daten trägt, die Steuerinformationen der physischen Schicht oder das MAC-Steuerelement ferner einen Direktzugriffspräambelindex und einen Übertragungsparameterkonfigurationsindex tragen, und der Übertragungsparameterkonfigurationsindex dazu verwendet wird, eine oder mehrere Übertragungsparameterkonfigurationen anzugeben, die zum Übertragen der Daten verwendet werden; und
die Sende-/Empfangseinheit dazu konfiguriert ist, die Daten in der Msgl an die erste drahtlose Vorrichtung basierend auf der Übertragungsparameterkonfiguration, die durch den Übertragungsparameterkonfigurationsindex angegeben ist, zu senden.

8. Kommunikationsvorrichtung gemäß Anspruch 5, wobei die Angabeinformationen speziell angeben, dass der Direktzugriffsmodus eine Msgl sendet, die Daten trägt, die Steuerinformationen der physischen Schicht oder das MAC-Steuerelement ferner einen Übertragungsparameterkonfigurationsindex tragen, und der Übertragungsparameterkonfigurationsindex dazu verwendet wird, eine oder mehrere Übertragungsparameterkonfigurationen anzugeben, die zum Übertragen der Daten verwendet werden; und
die Sende-/Empfangseinheit dazu konfiguriert ist, die Daten in der Msgl an die erste drahtlose Vorrichtung basierend auf der Übertragungsparameterkonfiguration, die durch den Übertragungsparameterkonfigurationsindex angegeben ist, zu senden.

9. Direktzugriffsverfahren, umfassend:
Senden (210) von Angabeinformationen durch eine erste drahtlose Vorrichtung an eine zweite drahtlose Vorrichtung, wobei die Angabeinformationen dazu verwendet werden, einen Direktzugriffsmodus der zweiten drahtlosen Vorrichtung anzugeben, und die Angabeinformationen in Steuerinformationen der physischen Schicht oder einem Medienzugriffssteuerungs-MAC-Steuerelement getragen werden, und wobei die Angabeinformationen in einem oder mehreren reservierten Bits in den Steuerinformationen der physischen Schicht oder dem MAC-Steuerelement getragen werden; und
Empfangen (220) einer ersten Nachricht Msgl, die durch die zweite drahtlose Vorrichtung in einer Direktzugriffsprozedur gemäß dem angegebenen Direktzugriffsmodus der zweiten drahtlosen Vorrichtung gesendet wird, durch die erste drahtlose Vorrichtung; und
wobei der Direktzugriffsmodus ein beliebiges von Folgendem umfasst:
Senden einer Msgl, die eine Direktzugriffspräambel trägt; oder
Senden einer Msgl, die eine Direktzugriffspräambel und Daten trägt; oder
Senden einer Msgl, die Daten trägt.

## Revendications

1. Appareil de communication, comprenant une unité d'émissionréception et une unité de traitement, dans lequel
l'unité de traitement est configurée pour générer des informations d'indication ;
l'unité d'émission-réception est configurée pour envoyer les informations d'indication à un second dispositif sans fil, dans lequel les informations d'indication sont utilisées pour indiquer un mode d'accès aléatoire du second dispositif sans fil, et les informations d'indication sont transportées dans des informations de commande de couche physique ou un élément de commande de commande d'accès au support MAC, et dans lequel les informations d'indication sont transportées dans un ou plusieurs bits réservés dans les informations de commande de couche physique ou l'élément de commande MAC ; et
l'unité d'émission-réception est également configurée pour recevoir un premier message Msgl envoyé par le second dispositif sans fil dans une procédure d'accès aléatoire conformément au mode d'accès aléatoire indiqué du second dispositif sans fil ; et
dans lequel le mode d'accès aléatoire comprend l'un quelconque des éléments suivants :
l'envoi d'un Msgl qui transporte un préambule d'accès aléatoire ; ou
l'envoi d'un Msgl qui transporte un préambule d'accès aléatoire et des données ; ou
l'envoi d'un Msgl qui transporte des données.

2. Appareil de communication selon la revendication 1, dans lequel les informations d'indication indiquent spécifiquement que le mode d'accès aléatoire du second dispositif sans fil envoie un Msgl qui transporte un préambule d'accès aléatoire et des données ; et
les informations de commande de couche physique ou l'élément de commande MAC transportent également un index de préambule d'accès aléatoire, et l'index de préambule d'accès aléatoire est utilisé pour déterminer le préambule d'accès aléatoire et une configuration de paramètre de transmission utilisée pour transmettre les données.

3. Appareil de communication selon la revendication 1, dans lequel les informations d'indication indiquent spécifiquement que le mode d'accès aléatoire du second dispositif sans fil envoie un Msgl qui transporte un préambule d'accès aléatoire et des données ; et
les informations de commande de couche physique ou l'élément de commande MAC transportent également un index de préambule d'accès aléatoire et un index de configuration de paramètre de transmission, et l'index de configuration de paramètre de transmission indique une ou plusieurs configurations de paramètre de transmission utilisées pour transmettre les données.

4. Appareil de communication selon la revendication 1, dans lequel les informations d'indication indiquent spécifiquement que le mode d'accès aléatoire du second dispositif sans fil envoie un Msgl qui transporte des données ; et
les informations de commande de couche physique ou l'élément de commande MAC transportent également un index de configuration de paramètre de transmission, et l'index de configuration de paramètre de transmission est utilisé pour indiquer une ou plusieurs configurations de paramètre de transmission utilisées pour transmettre les données.

5. Appareil de communication, comprenant une unité d'émissionréception et une unité de traitement, dans lequel
l'unité d'émission-réception est configurée pour obtenir des informations d'indication envoyées par un premier dispositif sans fil, dans lequel les informations d'indication sont utilisées pour indiquer un mode d'accès aléatoire de l'appareil de communication, et les informations d'indication sont transportées dans des informations de commande de couche physique ou un élément de commande de commande d'accès au support MAC, et dans lequel les informations d'indication sont transportées dans un ou plusieurs bits réservés dans les informations de commande de couche physique ou l'élément de commande MAC ;
l'unité de traitement est configurée pour générer un premier message Msgl sur la base des informations d'indication ; et
l'unité d'émission-réception est également configurée pour envoyer le Msgl au premier dispositif sans fil sur la base des informations d'indication ; et
dans lequel l'unité de traitement est spécifiquement configurée pour :
générer, sur la base des informations d'indication, un Msgl qui transporte un préambule d'accès aléatoire ; ou
générer, sur la base des informations d'indication, un Msgl qui transporte un préambule d'accès aléatoire et des données ; ou
générer, sur la base des informations d'indication, un Msgl qui transporte des données.

6. Appareil de communication selon la revendication 5, dans lequel les informations d'indication indiquent spécifiquement que le mode d'accès aléatoire envoie un Msgl qui transporte un préambule d'accès aléatoire et des données, et les informations de commande de couche physique ou l'élément de commande MAC transportent également un index de préambule d'accès aléatoire ;
l'unité de traitement est également configurée pour déterminer, sur la base de l'index de préambule d'accès aléatoire, une configuration de paramètre de transmission qui est associée à l'index de préambule d'accès aléatoire et qui est utilisée pour transmettre les données ; et
l'unité d'émission-réception est configurée pour envoyer les données du Msgl au premier dispositif sans fil sur la base de la configuration de paramètre de transmission déterminée utilisée pour transmettre les données.

7. Appareil de communication selon la revendication 5, dans lequel les informations d'indication indiquent spécifiquement que le mode d'accès aléatoire envoie un Msgl qui transporte un préambule d'accès aléatoire et des données, les informations de commande de couche physique ou l'élément de commande MAC transportent également un index de préambule d'accès aléatoire et un index de configuration de paramètre de transmission, et l'index de configuration de paramètre de transmission est utilisé pour indiquer une ou plusieurs configurations de paramètre de transmission utilisées pour transmettre les données ; et
l'unité d'émission-réception est configurée pour envoyer les données du Msgl au premier dispositif sans fil sur la base de la configuration de paramètre de transmission indiquée par l'index de configuration de paramètre de transmission.

8. Appareil de communication selon la revendication 5, dans lequel les informations d'indication indiquent spécifiquement que le mode d'accès aléatoire envoie un Msgl qui transporte des données, les informations de commande de couche physique ou l'élément de commande MAC transportent également un index de configuration de paramètre de transmission, et l'index de configuration de paramètre de transmission est utilisé pour indiquer une ou plusieurs configurations de paramètre de transmission utilisées pour transmettre les données ; et
l'unité d'émission-réception est configurée pour envoyer les données du Msgl au premier dispositif sans fil sur la base de la configuration de paramètre de transmission indiquée par l'index de configuration de paramètre de transmission.

9. Procédé d'accès aléatoire, comprenant :
l'envoi (210), par un premier dispositif sans fil, d'informations d'indication à un second dispositif sans fil, dans lequel les informations d'indication sont utilisées pour indiquer un mode d'accès aléatoire du second dispositif sans fil, et les informations d'indication sont transportées dans des informations de commande de couche physique ou un élément de commande de commande d'accès au support MAC, et dans lequel les informations d'indication sont transportées dans un ou plusieurs bits réservés dans les informations de commande de couche physique ou l'élément de commande MAC ; et
la réception (220), par le premier dispositif sans fil, d'un premier message Msgl envoyé par le second dispositif sans fil dans une procédure d'accès aléatoire conformément au mode d'accès aléatoire indiqué du second dispositif sans fil ; et
dans lequel le mode d'accès aléatoire comprend l'un quelconque des éléments suivants :
l'envoi d'un Msgl qui transporte un préambule d'accès aléatoire ; ou
l'envoi d'un Msgl qui transporte un préambule d'accès aléatoire et des données ; ou
l'envoi d'un Msgl qui transporte des données.
